(19) Europäisches Patentamt European Patent Office Office européen des brevets

(11) **EP 4 723 724 A1**

(12) **EUROPEAN PATENT APPLICATION**
published in accordance with Art. 153(4) EPC

(43) Date of publication:
08.04.2026 Bulletin 2026/15

(21) Application number: 24814458.6

(22) Date of filing: 29.05.2024

(51) International Patent Classification (IPC):
*H04W 24/10* (2009.01)

(52) Cooperative Patent Classification (CPC):
H04B 7/06; H04L 5/00; H04W 24/10

(86) International application number:
PCT/CN2024/095917

(87) International publication number:
WO 2024/245261 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.06.2023 CN 202310646576
08.06.2023 CN 202310675993

(71) Applicant: Apogee Networks, LLC
Plano, TX 75024 (US)

(72) Inventors:
• WU, Keying
Shanghai 201206 (CN)
• ZHANG, Xiaobo
Shanghai 201206 (CN)

(74) Representative: Gunzelmann, Rainer
Wuesthoff & Wuesthoff
Patentanwälte und Rechtsanwalt PartG mbB
Schweigerstraße 2
81541 München (DE)

(54) **METHOD AND APPARATUS USED FOR NODE IN WIRELESS COMMUNICATION**

(57) Disclosed in the present application are a method and apparatus used for nodes in wireless communications. The method comprises: a first node receiving a first information block, the first node sending first CSI. The first information block is used for determining a first RS resource set, and a measurement for the first RS resource set is used for generating a first bit group; the first CSI carries at least part of bits in the first bit group; the first bit group comprises M bit subgroups, and any two of the M bit subgroups have different priorities; a target bit is one bit in the first bit group, and the bit subgroup among the M bit subgroups to which the target bit belongs depends on position or first parameter of the target bit; each bit in the first bit group corresponds to one parameter in a first parameter group, and the first parameter is a parameter corresponding to the target bit in the first parameter group. By means of using the method, CSI reporting performance can be improved and CSI reporting overheads can be reduced.

FIG. 1

AA  First node
BB  Receive a first information block
CC  Send first CSI

## Description

### Technical Field

The present application relates to a transmission method and apparatus in a wireless communication system, in particular to a scheme and apparatus related to CSI (Channel Status Information) in the wireless communication system.

### Background Art

In conventional wireless communication, a UE (User Equipment) report may comprise at least one of various types of auxiliary information, for example, CSI, auxiliary information related to Beam Management, auxiliary information related to positioning, and the like. The CSI comprises at least one of a CRI (CSI-RS Resource Indicator), an RI (Rank Indicator), a PMI (Precoding Matrix Indicator), or a CQI (Channel Quality Indicator).

A network device selects an appropriate transmission parameter, for example, a resident cell, an MCS (Modulation and Coding Scheme), a TPMI (Transmitted Precoding Matrix Indicator), a TCI (Transmission Configuration Indication), and other parameters for the UE based on the UE report. In addition, the UE report may be used to optimize a network parameter, for example, better cell coverage, switching a base station based on a location of the UE, and the like.

In an NR (New Radio) system, a priority of information in the CSI is defined, and the priority is used to determine an order in which the information in CSI is omitted.

With an increase in a number of antennas and improvement of a requirement for system performance, a conventional PMI feedback manner may bring a large amount of redundant overheads. Therefore, in NR R (release) 18, CSI compression based on AI (Artificial Intelligence) or ML (Machine Learning) was initiated.

### Summary of the Invention

The applicant has found through researches that an existing priority scheme may not be able to adapt to new channel information. In view of the above problems, the present application discloses a solution. It should be noted that although a large number of embodiments of the present application are directed to AI/ML, the present application is also applicable to other schemes, such as a conventional CSI report scheme. In addition, the use of a unified solution for different scenarios (including but being not limited to a scheme based on AI/ML and the conventional CSI report scheme) also facilitates reduction of hardware complexity and costs. In the absence of conflicts, embodiments in a first node of the present application and features in the embodiments can be applied to a second node, and vice versa. In the absence of conflicts, embodiments of the present application and features in the embodiments can be arbitrarily combined with each other.

As one embodiment, interpretations of terminologies in the present application refer to definitions of TS38 series of the standard protocol of 3GPP.

The present application discloses a method used for a first node in wireless communication, characterized by comprising:

receiving a first information block, wherein the first information block is used for determining a first RS resource set, and the first RS resource set comprises one or more RS resources; and
sending first CSI,
wherein a measurement for the first RS resource set is used for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

As one embodiment, a problem to be solved by the present application comprises: how to determine priorities of different bits in the first bit group. The above-mentioned method solves this problem by making determination of the priorities to depend on the position of the target bit or the first parameter.

As one embodiment, the benefits of the above-mentioned method comprise: improving performance of a CSI report.

As one embodiment, the benefits of the above-mentioned method comprise: avoiding excessively high overheads of a CSI report.

As one embodiment, the benefits of the above-mentioned method comprise: being capable of better balancing accuracy and overheads of a CSI report and optimizing a system design.

According to one aspect of the present application, characterized in that the first bit group depends on first compressed CSI; and the first compressed CSI satisfies at least one of the following:

a channel parameter recovered by a sender of the first RS resource set based on the first compressed CSI is unknown to the first node;
a channel parameter recovered by the first node based on the first compressed CSI is unknown to the sender of the first RS resource set;
a generator used for generating the first compressed CSI is obtained based on training; and
the first compressed CSI does not belong to the CSI defined in 3GPP Rel-17, nor does it belong to the CSI defined in versions prior to 3GPP Rel-17.

As one embodiment, the essence of the above-mentioned method comprises: the first bit group carries CSI based on artificial intelligence or machine learning.

As one embodiment, a problem to be solved by the present application comprises: how to determine priorities of different bits for the CSI based on artificial intelligence or machine learning. The above-mentioned method solves this problem by using the position of the target bit or the corresponding parameter in the first parameter group to determine a priority of the target bit.

As one embodiment, the benefits of the above-mentioned method comprise: solving the problem of determining priorities of different bits in a CSI report based on artificial intelligence or machine learning.

As one embodiment, the benefits of the above-mentioned method comprise: being capable of better balancing accuracy and report quantity of a CSI report, and optimizing a system design.

According to one aspect of the present application, characterized in that the first bit group is generated after the first compressed CSI is quantized.

As one embodiment, the benefits of the above-mentioned method comprise: backward compatibility of quantization and little changes to an existing standard.

As one embodiment, the benefits of the above-mentioned method comprise: being flexibly applicable to different terminals, and reducing a demand for capabilities of the terminals.

As one embodiment, the benefits of the above-mentioned method comprise: reducing implementation complexity.

According to one aspect of the present application, characterized in that the first bit group comprises a plurality of bit blocks, and each bit block in the first bit group comprises a plurality of bits; the position of the target bit refers to a position of the target bit in a first bit block; and the first bit block is a bit block among the plurality of bit blocks that comprises the target bit.

As one embodiment, the essence of the above-mentioned method comprises: determining the priority of the target bit based on an importance of the target bit in quantization.

As one embodiment, the benefits of the above-mentioned method comprise: ensuring that a bit with a higher importance in quantization has a higher priority, and improving accuracy of a CSI report, and thereby enhancing system performance.

As one embodiment, the benefits of the above-mentioned method comprise: having lower implementation complexity, thereby reducing a requirement for a capability of a terminal.

As one embodiment, the benefits of the above-mentioned method comprise: better backward compatibility.

According to one aspect of the present application, characterized in that the measurement for the first RS resource set is used for generating an input of a first encoder, and an output of the first encoder is used for generating the first CSI; and the output of the first encoder comprises the first parameter group.

As one embodiment, the essence of the above-mentioned method comprises: the first encoder generates the first parameter group to indicate importances of different elements in CSI output by the first encoder.

As one embodiment, the benefits of the above-mentioned method comprise: optimizing system performance.

As one embodiment, the benefits of the above-mentioned method comprise: ensuring that a most important part has a highest priority, thereby improving accuracy of a CSI report.

According to one aspect of the present application, the first CSI only carries $M0$ bit subgroups with the highest priority among the $M$ bit subgroups, and $M0$ is less than $M$; a first reference value depends on a total number of bits comprised in the $M0$ bit subgroups, and the first reference value is not greater than a first threshold; a second reference value depends on a total number of bits comprised in $(M0+1)$ bit subgroups, the second reference value is greater than the first threshold, and the $(M0+1)$ bit subgroups are $(M0+1)$ bit subgroups with the highest priority among the $M$ bit subgroups; and the first threshold is a positive integer.

As one embodiment, the benefits of the above-mentioned method comprise: balancing accuracy and overheads of a CSI report.

As one embodiment, the benefits of the above-mentioned method comprise: improving performance of a CSI report while avoiding excessively high overheads.

According to one aspect of the present application, the first CSI carries a second bit group, and a measurement for the first RS resource set is used for generating the second bit group; and the second bit group has a higher priority than the $M$ bit subgroups.

As one embodiment, the benefits of the above-mentioned method comprise: further optimizing a CSI report

According to one aspect of the present application, characterized in that the first node is user equipment.

According to one aspect of the present application, characterized in that the first node is a relay node.

The present application discloses a method used for a second node in wireless communication, characterized by comprising:

> sending a first information block, wherein the first information block is used for determining a first RS resource set, and the first RS resource set comprises one or more RS resources; and
> receiving first CSI,

wherein a measurement for the first RS resource set is used for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

According to one aspect of the present application, characterized in that the first bit group depends on first compressed CSI; and the first compressed CSI satisfies at least one of the following:

a channel parameter recovered by the second node based on the first compressed CSI is unknown to a sender of the first CSI;
a channel parameter recovered by the sender of the first CSI based on the first compressed CSI is unknown to the second node;
a generator used for generating the first compressed CSI is obtained based on training; and
the first compressed CSI does not belong to the CSI defined in 3GPP Rel-17, nor does it belong to the CSI defined in versions prior to 3GPP Rel-17.

According to one aspect of the present application, characterized in that the first bit group is generated after the first compressed CSI is quantized.

According to one aspect of the present application, characterized in that the first bit group comprises a plurality of bit blocks, and each bit block in the first bit group comprises a plurality of bits; the position of the target bit refers to a position of the target bit in a first bit block; and the first bit block is a bit block among the plurality of bit blocks that comprises the target bit.

According to one aspect of the present application, characterized in that the measurement for the first RS resource set is used for generating an input of a first encoder, and an output of the first encoder is used for generating the first CSI; and the output of the first encoder comprises the first parameter group.

According to one aspect of the present application, the first CSI only carries M0 bit subgroups with the highest priority among the M bit subgroups, and M0 is less than M; a first reference value depends on a total number of bits comprised in the M0 bit subgroups, and the first reference value is not greater than a first threshold; a second reference value depends on a total number of bits comprised in (M0+1) bit subgroups, the second reference value is greater than the first threshold, and the (M0+1) bit subgroups are (M0+1) bit subgroups with the highest priority among the M bit subgroups; and the first threshold is a positive integer.

According to one aspect of the present application, the first CSI carries a second bit group, and a measurement for the first RS resource set is used for generating the second bit group; and the second bit group has a higher priority than the M bit subgroups.

According to one aspect of the present application, characterized in that the second node is a base station.

According to one aspect of the present application, characterized in that the second node is user equipment.

According to one aspect of the present application, characterized in that the second node is a relay node.

The present application discloses a first node used in wireless communication, characterized by comprising:

a first receiver receiving a first information block, wherein the first information block is used for determining a first RS resource set, and the first RS resource set comprises one or more RS resources; and
a first transmitter sending first CSI,
wherein a measurement for the first RS resource set is used for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

The present application discloses a second node used in wireless communication, characterized by comprising:

a second transmitter sending a first information block, wherein the first information block is used for determining a first RS resource set, and the first RS resource set comprises one or more RS resources; and
a second receiver receiving first CSI,
wherein a measurement for the first RS resource set is used for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

As one embodiment, compared with the conventional solutions, the present application has the following advantages:

The problem of determining priorities of different information or bits in a CSI report based on artificial intelligence or machine learning is solved.

Performance of a CSI report is improved.

Overheads of a CSI report are reduced.

**Brief Description of the Drawings**

By reading the detailed descriptions of non-limiting embodiments with reference to the following drawings, other features, purposes, and advantages of the present application will become more obvious.

FIG. 1 shows a flowchart of a first information block and first CSI according to one embodiment of the present application;

FIG. 2 shows a schematic diagram of a network architecture according to one embodiment of the present application;

FIG. 3 shows a schematic diagram of an embodiment of a wireless protocol architecture for a user plane and a control plane according to one embodiment of the present application;

FIG. 4 shows a schematic diagram of a first communication device and a second communication device according to one embodiment of the present application;

FIG. 5 shows transmission between a first node and a second node according to one embodiment of the present application;

FIG. 6 shows a schematic diagram for a bit subgroup among the M bit subgroups to which the target bit belongs depends on a position of the target bit according to one embodiment of the present application;

FIG. 7 shows a schematic diagram of a bit subgroup among the M bit subgroups to which the target bit belongs depends on a first parameter according to one embodiment of the present application;

FIG. 8 shows a schematic diagram of a first encoder according to one embodiment of the present application;

FIG. 9 shows a schematic diagram of a first bit group depending on first compressed CSI according to one embodiment of the present application;

FIG. 10 shows a schematic diagram of a processing system based on artificial intelligence or machine learning according to one embodiment of the present application;

FIG. 11 shows a schematic diagram of a first bit group being generated after first compressed CSI is quantized according to one embodiment of the present application;

FIG. 12 shows a schematic diagram of a first bit group being generated after first compressed CSI is quantized according to one embodiment of the present application;

FIG. 13 shows a schematic diagram of a first bit group being generated after first compressed CSI is quantized according to one embodiment of the present application;

FIG. 14 shows a schematic diagram of the position of the target bit according to one embodiment of the present application;

FIG. 15 shows a schematic diagram for a bit subgroup among the M bit subgroups to which the target bit belongs depends on a position of the target bit according to one embodiment of the present application;

FIG. 16 shows a schematic diagram of an output of a first encoder comprising a first parameter group according to one embodiment of the present application;

FIG. 17 shows a schematic diagram of first CSI only carrying M0 bit subgroups with the highest priority in M bit subgroups according to one embodiment of the present application;

FIG. 18 shows a schematic diagram of a second given bit subgroup according to one embodiment of the present application;

FIG. 19 shows a structural block diagram of a processing device used in the first node according to one embodiment of the present application; and

FIG. 20 shows a structural block diagram of a processing device used in the second node according to one embodiment of the present application.

**Detailed Description of Embodiments**

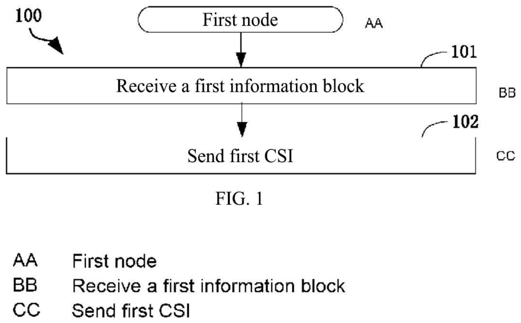

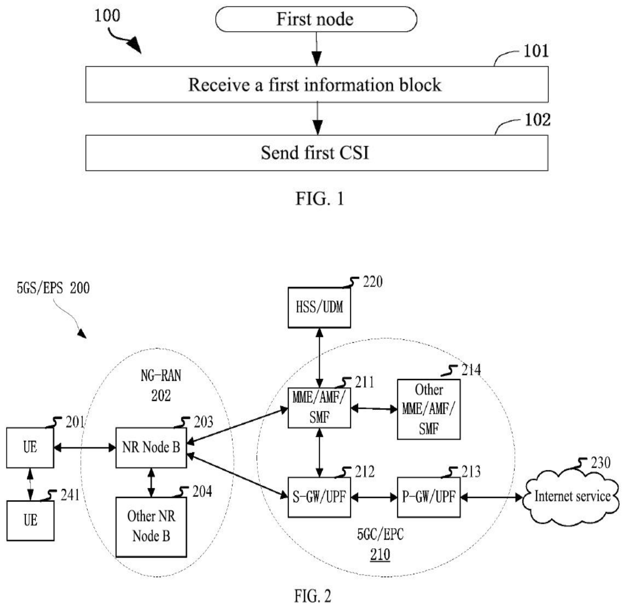

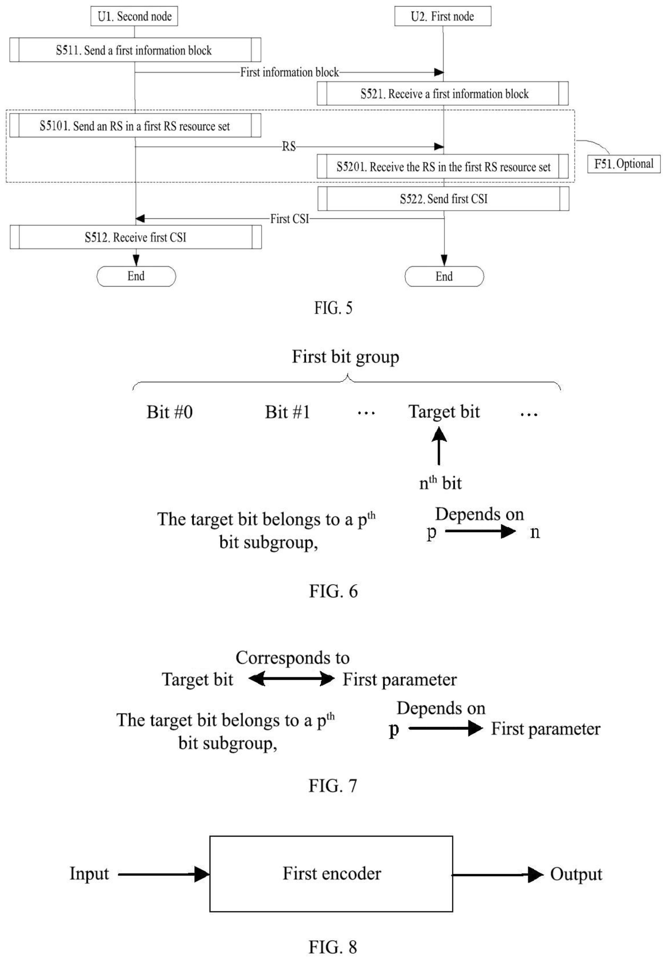

The technical solutions of the present application will be further described in detail below in conjunction with drawings. It should be noted that, in the absence of conflicts, embodiments and the features in the embodiments in the present application can be arbitrarily combined with each other. Based on consideration of flexibility, complexity, overhead, and compatibility, those skilled in the art are motivated to flexibly combine embodiments in different drawings without conflicts, for example (but not limited to) the embodiment in FIG. 1 and the embodiments in FIG. 5 to FIG. 20, the embodiment in FIG. 5 and the embodiments in FIG. 6 to FIG. 20, and the like.

## Embodiment 1

Embodiment 1 illustrates a flowchart of a first information block and first CSI according to one embodiment of the present application, as shown in FIG. 1. In 100 shown in FIG. 1, each block represents one step. In particular, an order of steps in blocks does not represent a specific temporal order relationship in various steps.

In Embodiment 1, a first node in the present application receives a first information block in step 101, and receives first CSI in step 102.

In Embodiment 1, the first information block is used for determining a first RS resource set, and the first RS resource set comprises one or more RS resources; a measurement for the first RS resource set is used for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

As one embodiment, the first information block is carried by higher layer signaling.

As one embodiment, the first information block is carried by RRC (Radio Resource Control) signaling.

As one embodiment, the first information block is carried by an RRC IE (Information Element).

As one embodiment, the first information block is carried by at least one RRC IE.

As one embodiment, the first information block comprises information in one or more fields in at least one RRC IE.

As one embodiment, the first information block comprises information in one or more fields in each RRC IE of a plurality of RRC IEs.

As one embodiment, the first information block is one RRC IE.

As one embodiment, the first information block is carried by a CSI-ReportConfig IE.

As one embodiment, the first information block is carried by a ServingCellConfig IE.

As one embodiment, the first information block is carried by a CSI-MeasConfig IE.

As one embodiment, the first information block is carried by a ServingCellConfigCommon IE.

As one embodiment, the first information block is carried by a ServingCellConfigCommonSIB IE.

As one embodiment, the first information block is a CSI-ReportConfig IE.

As one embodiment, the first information block indicates the first RS (Reference Signal) resource set.

As one embodiment, a first information block indicates an identifier of the first RS resource set.

As one embodiment, an identifier of the first RS resource set is NZP-CSI-RS-ResourceSetId.

As one embodiment, an identifier of the first RS resource set is CSI-SSB-ResourceSetId.

As one embodiment, an identifier of the first RS resource set is CSI-ResourceConfigId.

As one embodiment, an identifier of the first RS resource set is SSB-Index.

As one embodiment, an identifier of the first RS resource set is NZP-CSI-RS-ResourceSetId or CSI-SSB-ResourceSetId.

As one embodiment, the first information block indicates an identifier of each RS resource in the first RS resource set.

As one embodiment, an identifier of each RS resource in the first RS resource set is NZP-CSI-RS-ResourceId.

As one embodiment, an identifier of each RS resource in the first RS resource set is SSB-Index.

As one embodiment, an identifier of any RS resource in the first RS resource set is NZP-CSI-RS-ResourceId or SSB-Index.

As one embodiment, the first information block indicates that the first RS resource set is used for a channel measurement.

As one embodiment, the first information block indicates that the first RS resource set is used for an interference measurement.

As one embodiment, a resourcesForChannelMeasurement field in the first information block indicates the first RS resource set.

As one embodiment, the first information block and a second information block are used together for determining the first RS resource set.

As one embodiment, the first information block and a second information block together indicate the first RS resource set.

As one embodiment, the first information block indicates a plurality of RS resource sets, and the first RS resource set is one of the plurality of RS resource sets; and the second information block indicates the first RS resource set from the plurality of RS resource sets.

As one embodiment, the first information block indicates that the plurality of RS resource sets are all used for a channel measurement.

As one embodiment, the second information block is carried by at least one RRC IE.

As one embodiment, the second information block is carried by a MAC CE (Medium Access Control Layer Control Element).

As one embodiment, the second information block is a CSI-AperiodicTriggerStateList IE.

As one embodiment, the second information block and the first information block are carried by a same RRC IE.

As one embodiment, the second information block and the first information block are respectively carried by different RRC IEs.

As one embodiment, the first RS resource set is identified by one CSI-ResourceConfigId.

As one embodiment, the first RS resource set is one CSI-RS (Channel State Information Reference Signal) resource set.

As one embodiment, the first RS resource set is one NZP (non-zero-power) CSI-RS resource set.

As one embodiment, the first RS resource set is identified by one NZP-CSI-RS-ResourceSetId.

As one embodiment, the first RS resource set is one CSI-SSB resource set.

As one embodiment, the first RS resource set is identified by one CSI-SSB-ResourceSetId.

As one embodiment, the first RS resource set comprises only one RS resource.

As one embodiment, the first RS resource set comprises a plurality of RS resources. As one embodiment, each RS resource in the first RS resource set is one CSI-RS resource.

As one embodiment, each RS resource in the first RS resource set is one NZP CSI-RS resource.

As one embodiment, each RS resource in the first RS resource set is identified by one NZP-CSI-RS-ResourceId.

As one embodiment, each RS resource in the first RS resource set is one SS/PBCH (Synchronisation Signal/Physical Broadcast Channel) block resource.

As one embodiment, each RS resource in the first RS resource set is identified by one SSB-Index.

As one embodiment, any RS resource in the first RS resource set is one CSI-RS resource or SS/PBCH block resource.

As one embodiment, any RS resource in the first RS resource set is identified by one NZP-CSI-RS-ResourceId or SSB-Index.

As one embodiment, each RS resource in the first RS resource set comprises at least one RS port.

As one embodiment, the RS port comprises an antenna port.

As one embodiment, the RS port comprises a CSI-RS port.

As one embodiment, the RS port comprises an antenna port or a CSI-RS port.

As one embodiment, RS resources in the first RS resource set belong to a same cell.

As one embodiment, two RS resources in the first RS resource set belong to different cells.

As one embodiment, RS resources in the first RS resource set belong to a same BWP (Bandwidth part).

As one embodiment, two RS resources in the first RS resource set belong to different BWPs.

As one embodiment, the first RS resource set is an RS resource set that is associated with the first CSI (Channel State Information) and that is used for a channel measurement.

As one embodiment, an RS resource set that is associated with the first CSI (Channel State Information) and that is used for a channel measurement is the first RS resource set.

As one embodiment, the first CSI comprises one report of a CSI report for configuration of the first information block.

As one embodiment, the first CSI comprises one CSI report generated according to configuration of the first information block.

As one embodiment, the first CSI comprises one CSI report for the first information block, and the first information block indicates values of part or all of higher-layer parameters in higher layer parameters "resourcesForChannelMeasurement", "csi-IM-ResourcesForInterference", "reportQuantity", "nzp-CSI-RS-ResourcesForInterference", "reportConfigType", "reportFreqConfiguration", "timeRestrictionForChannelMeasurements", "timeRestrictionForInterferenceMeasurements", "subbandSize", or "codebookConfig" that correspond to the one CSI report for the first information block.

As one embodiment, the first CSI comprises one or more of a CQI (Channel Quality Indicator), a PMI (Precoding Matrix Indicator), a CRI (CSI-RS resource indicator), an SSBRI (SS/PBCH Block Resource Indicator), an LI (Layer Indicator), an RI (Rank Indicator), an L1-RSRP (Layer 1 Reference Signal Received Power), an L1-SINR (Layer 1 Signal-to-Interference and Noise Ratio), or CapabilityIndex.

As one embodiment, the first CSI comprises at least part of bits in the first bit group, and comprises one or more of a CQI, a PMI, a CRI, an SSBRI, an LI, an RI, an L1-RSRP, an L1-SINR, or CapabilityIndex.

As one embodiment, the first bit group comprises a plurality of bits.

As one embodiment, the first bit group carries CSI.

As one embodiment, the CSI carried by the first bit group satisfies at least one of the following:

a channel parameter recovered by a sender of the first RS resource set based on the CSI carried by the first bit group is unknown to the first node;
a channel parameter recovered by the first node based on the CSI carried by the first bit group is unknown to the sender of the first RS resource set;
a generator used for generating the CSI carried by the first bit group is obtained based on training; and
the CSI carried by the first bit group does not belong to the CSI defined in 3GPP Rel-17, nor does it belong to the CSI defined in versions prior to 3GPP Rel-17.

As one embodiment, the essence of the above-mentioned method comprises: the first bit group carries CSI based on artificial intelligence or machine learning.

As one embodiment, a problem to be solved by the present application comprises: how to determine priorities of different bits for the CSI based on artificial intelligence or machine learning. The above-mentioned method solves this problem by using a position of a target bit or the corresponding first parameter for determining a priority of the target bit.

As one embodiment, the benefits of the above-mentioned method comprise: solving the problem of determining priorities of different bits in a CSI report based on artificial intelligence or machine learning.

As one embodiment, the benefits of the above-mentioned method comprise: improving performance of a CSI report.

As one embodiment, the benefits of the above-mentioned method comprise: reducing overheads of a CSI report.

As one embodiment, the benefits of the above-mentioned method comprise: being capable of better balancing accuracy and overheads of a CSI report and optimizing a system design.

As one embodiment, the sender of the first RS resource set refers to a sender of an RS transmitted in the first RS resource set.

As one embodiment, the sender of the first RS resource set is a sender of the first information block.

As one embodiment, the sender of the first RS resource set is a target recipient of the first CSI.

As one embodiment, the sender of the first RS resource set is the second node.

As one embodiment, the first CSI carrying at least part of bits in the first bit group refers to: the at least part of bits in the first bit group are used for generating the first CSI.

As one embodiment, the first CSI carrying at least part of bits in the first bit group refers to: the first CSI comprises the at least part of bits in the first bit group.

As one embodiment, the first CSI carries only part of bits in the first bit group.

As one embodiment, the first CSI carries all bits in the first bit group.

As one embodiment, only part of bits in the first bit group are used for generating the first CSI.

As one embodiment, all bits in the first bit group are used for generating the first CSI.

As one embodiment, the first CSI is generated by at least part of bits in the first bit group undergoing part or all of CRC attachment, channel coding, rate matching, concatenation, and multiplexing.

As one embodiment, the first CSI is generated by at least part of bits in the first bit group undergoing part or all of CRC attachment, channel coding, rate matching, concatenation, multiplexing, modulation, layer mapping, transform precoding, precoding, and RB (resource block) mapping.

As one embodiment, the measurement for the first RS resource set refers to a measurement for an RS transmitted in the first RS resource set.

As one embodiment, the first RS resource set is used for obtaining a channel measurement used for generating the first bit group.

As one embodiment, the first RS resource set is used for obtaining an interference measurement used for generating the first bit group.

As one embodiment, each RS resource in the first RS resource set is used for obtaining a channel measurement used for generating the first bit group.

As one embodiment, only part of RS resources in the first RS resource set is used for obtaining a channel measurement used for generating the first bit group.

As one embodiment, the first node obtains, based on the first RS resource set, a channel measurement used for generating the first bit group.

As one embodiment, the first node obtains, based on an RS that is transmitted in the first RS resource set and that is not later than a CSI reference resource of the first CSI, a channel measurement used for generating the first bit group.

As one embodiment, the first node obtains, based on a most recent transmission occasion that is of an RS resource in the first RS resource set and that is not later than a CSI reference resource of the first CSI, a channel measurement used for generating the first bit group.

As one embodiment, the first node obtains, only based on the first RS resource set, a channel measurement used for generating the first bit group.

As one embodiment, the first node obtains, only based on an RS that is transmitted in the first RS resource set and that is not later than a CSI reference resource of the first CSI, a channel measurement used for generating the first bit group.

As one embodiment, the first node obtains, only based on a most recent transmission occasion that is of an RS resource in the first RS resource set and that is not later than a CSI reference resource of the first CSI, a channel measurement used for generating the first bit group.

As one embodiment, the first bit group consists of the M bit subgroups.

As one embodiment, the first bit group is divided into the M bit subgroups.

As one embodiment, bits in the first bit group are arranged in sequence, and the bits in the first bit subgroup are divided into the M bit subgroups in sequence.

As one embodiment, the first bit group further comprises at least one bit that does not belong to the M bit subgroups.

As one embodiment, there is no bit in the first bit group that belongs to two bit subgroups among the M bit subgroups at the same time.

As one embodiment, any two bit subgroups among the M bit subgroups do not comprise a common bit.

As one embodiment, the M is equal to 2.

As one embodiment, the M is equal to 3.

As one embodiment, the M is greater than 3.

As one embodiment, the first CSI carries the M bit subgroups, and the M bit subgroups are jointly encoded.

As one embodiment, the first CSI carries the M bit subgroups, and the M bit subgroups are respectively encoded.

As one embodiment, any two bit subgroups among the M bit subgroups comprise a different number of bits.

As one embodiment, any two bit subgroups among the M bit subgroups comprise a same number of bits.

As one embodiment, there are two bit subgroups among the M bit subgroups comprising a different number of bits.

As one embodiment, there are two bit subgroups among the M bit subgroups comprising a same number of bits.

As one embodiment, the M bit subgroups are arranged in sequence from a high priority to a low priority.

As one embodiment, the M bit subgroups are arranged in sequence from a high priority to a low priority, a priority of an $m1^{th}$ bit subgroup among the M bit subgroups is higher than that of an $m2^{th}$ bit subgroup among the M bit subgroups, the $m1^{th}$ bit subgroup and the $m2^{th}$ bit subgroup are any two bit subgroups among the M bit subgroups, and m1 is less than m2.

As one embodiment, the M bit subgroups are arranged in sequence from a high priority to a low priority, a priority of a first bit subgroup among the M bit subgroups has a highest priority among the M bit subgroups, a second bit subgroup among the M bit subgroups has a second highest priority among the M bit subgroups, and so on.

As one embodiment, a number of bits comprised in at least one bit subgroup among the M bit subgroups depends on a priority thereof.

As one embodiment, a number of bits comprised in at least one bit subgroup among the M bit subgroups depends on a position among the M bit subgroups thereof.

As one embodiment, a number of bits comprised in the M bit subgroups are respectively M integers, and at least one of the M integers is predefined or configurable.

As one embodiment, the M bit subgroups respectively correspond to M ratios, a number of bits comprised in any bit subgroup among the M bit subgroups is equal to a product of a corresponding ratio and a number of bits comprised in the first bit group, and at least one of the M ratios is predefined or configurable.

As one embodiment, the target bit is any bit in the first bit group.

As one embodiment, the target bit is any bit in bits in the first bit group that belong to the M bit subgroups.

As one embodiment, a bit subgroup among the M bit subgroups to which the target bit belongs depends on the first parameter.

As one embodiment, a bit subgroup among the M bit subgroups to which the target bit belongs depends on the position of the target bit.

As one embodiment, for any bit in the first bit group, a bit subgroup among the M bit subgroups to which the bit belongs depends on a position of the bit or a parameter in the first parameter group that corresponds to the bit.

As one embodiment, for any bit in the first bit group, a bit subgroup among the M bit subgroups to which the bit belongs depends on a position of the bit.

As one embodiment, for any bit in the first bit group, a bit subgroup among the M bit subgroups to which the bit belongs depends on a parameter in the first parameter group that corresponds to the bit.

As one embodiment, bits in the first bit group are arranged in sequence.

As one embodiment, the position of the target bit refers to: a position of the target bit in the first bit group.

As one embodiment, the position of the target bit refers to: which bit in the first bit group the target bit is.

As one embodiment, bits in the first bit group are arranged in sequence, and the position of the target bit refers to: a position of the target bit in the first bit group.

As one embodiment, bits in the first bit group are arranged in sequence, and the position of the target bit refers to: which bit in the first bit group the target bit is.

As one embodiment, the target bit is an $n^{th}$ bit in the first bit group.

As one embodiment, a value range of the n is from 1 to a number of bits comprised in the first bit group.

As one embodiment, the target bit is an $n^{th}$ bit in the first bit group, and the position of the target bit refers to the n.

As one embodiment, the target bit is an $n^{th}$ bit in the first bit group, and the position of the target bit refers to: either the n is odd or even.

As one embodiment, the position of the target bit depends on a first parameter, each bit in the first bit group corresponds to one parameter in a first parameter group, and the first parameter is a parameter in the first parameter group that corresponds to the target bit.

As one embodiment, bits in the first bit group are arranged in an ascending order according to a corresponding parameter in the first parameter group.

As one embodiment, bits in the first bit group are arranged in a descending order according to a corresponding parameter in the first parameter group.

As one embodiment, a parameter in the first parameter group that corresponds to an $n1^{th}$ bit in the first bit group is less than a parameter in the first parameter group that corresponds to an $n2^{th}$ bit in the first bit group; and the $n1^{th}$ bit and the $n2^{th}$ bit are respectively any two bits in the first bit group, and the n1 is less than the n2.

As one embodiment, a parameter in the first parameter group that corresponds to an $n1^{th}$ bit in the first bit group is greater than a parameter in the first parameter group that corresponds to an $n2^{th}$ bit in the first bit group; and the $n1^{th}$ bit and the $n2^{th}$ bit are respectively any two bits in the first bit group, and the n1 is less than the n2.

As one embodiment, the first parameter group comprise a plurality of parameters.

As one embodiment, each parameter in the first parameter group is one real number.

As one embodiment, each parameter in the first parameter group is one plural number.

As one embodiment, each parameter in the first parameter group is one non-negative real number.

As one embodiment, each parameter in the first parameter group is one integer.

As one embodiment, each parameter in the first parameter group is one non-negative integer.

As one embodiment, each parameter in the first parameter group is one character string.

As one embodiment, a number of parameters comprised in the first parameter group is equal to a number of bits comprised in the first bit group.

As one sub-embodiment of the above-mentioned embodiment, the parameters in the first parameter group correspond one-to-one to the bits in the first bit group.

As one embodiment, a number of parameters comprised in the first parameter group is less than a number of bits comprised in the first bit group.

As one embodiment, there are two bits in the first bit group that correspond to a same parameter in the first parameter group.

As one embodiment, for any parameter in the first parameter group, there is at least one bit in the first bit group that corresponds to the parameter.

As one embodiment, the first parameter group indicates importances of the bits in the first bit group.

As one embodiment, a bit corresponding to a greater parameter in the first parameter group has a higher importance.

As one embodiment, a bit corresponding to a smaller parameter in the first parameter group has a higher importance.

## Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced), and future 5G systems. The network architecture 200 of the LTE, LTE-A, and future 5G systems is referred to as an EPS (Evolved Packet System) 200. The 5G NR or LTE network architecture 200 may be referred to as a 5GS (5G System)/EPS (Evolved Packet System) 200 or other suitable terms. The 5GS/EPS 200 may comprise one or more pieces of UE (User Equipment) 201, one piece of UE241 performing sidelink communication with the UE201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but these entities/interfaces are not shown for simplicity. As shown in FIG. 2, the 5GS/EPS200 provides a packet switching service, but those skilled in the art may readily appreciate that various concepts presented throughout the present application may be extended to a network providing a circuit switching service. The NG-RAN202 comprises an NR (New Radio) Node B (gNB) 203 and other gNB204. The gNB203 provides user and control plane protocol termination toward the UE201. The gNB203 may be connected to the other gNB204 via an Xn interface (for example, backhaul). The gNB203 may also be referred to as a base station, a base transceiver station, a radio base station, a radio transceiver, a transceiver function, a basic service set (BSS), an extended service set (ESS), a TRP (transmitter receiver point), or other suitable terms. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (for example, an MP3 player), a camera, a game console, a drone, an aircraft, a narrowband physical network device, a machine type communication device, a land vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or other suitable terms. The gNB203 is connected to the 5GC/EPC210 via an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted by the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises an operator-corresponding Internet protocol service, which may specifically comprise the Internet, an intranet, an IMS (IP Multimedia Subsystem), and a packet switching service.

As one embodiment, the UE201 corresponds to the first node in the present application.

As one embodiment, the gNB203 corresponds to the second node in the present application.

As one embodiment, a wireless link between the UE201 and the gNB203 comprises a cellular network link.

As one embodiment, a sender of the first information block comprises the gNB203.

As one embodiment, a recipient of the first information block comprises the UE201.

As one embodiment, a sender of the first CSI comprises the UE201.

As one embodiment, a recipient of the first CSI comprises the gNB203.

As one embodiment, the UE201 supports generation of a CSI report through AI/ML.

As one embodiment, the UE201 supports generation of a trained model using training data or generation of some parameters in a trained model using trained data.

As one embodiment, the UE201 supports generation of a trained model using training data and generation of CSI by using the model.

As one embodiment, the gNB203 supports recovery of CSI based on AI or deep learning.

**Embodiment 3**

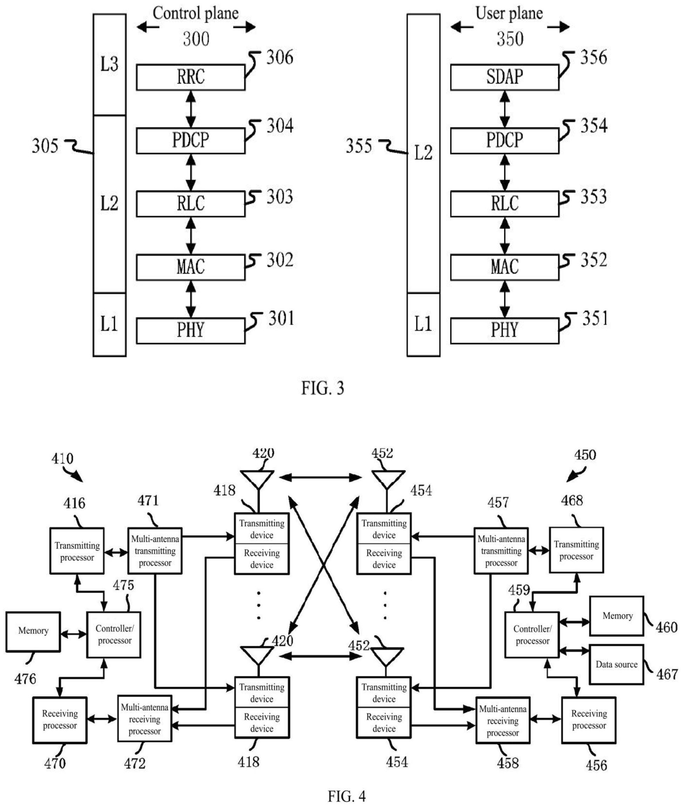

Embodiment 3 illustrates a schematic diagram of an embodiment of a wireless protocol architecture of a user plane and a control plane according to one embodiment of the present application, as shown in FIG. 3.

Embodiment 3 shows a schematic diagram of one embodiment of the wireless protocol architecture of a user plane and a control plane according to the present application, as shown in FIG. 3. FIG. 3 is a schematic diagram illustrating an embodiment of a radio protocol architecture of a user plane 350 and a control plane 300. FIG. 3 illustrates the radio protocol architecture of the control plane 300 used between a first communication node device (UE, a gNB, or an RSU in V2X) and a second communication node device (a gNB, UE, or an RSU in V2X), or between two pieces of UE using three layers: a Layer 1, a Layer 2, and a Layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301, and is responsible for a link between the first communication node device and the second communication node device, or between two pieces of UE. The L2 layer 305 comprises a MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 further provides security by encrypting data packets, and provides handover support for the first communication node device between second communication node devices. The RLC sublayer 303 provides segmentation and reassembly of an upper layer data packet, retransmission of a lost data packet, and reordering of a data packet to compensate for out-of-order reception due to an HARQ. The MAC sublayer 302 provides multiplexing between logical and transmission channels. The MAC sublayer 302 is further responsible for assigning various radio resources (for example, resource blocks) in one cell between first communication node devices. The MAC sublayer 302 is further responsible for an HARQ operation. An RRC (Radio Resource Control) sublayer 306 in the Layer 3 (L3 layer) in the control plane 300 is responsible for obtaining a radio resource (for example, a radio bearer) and configuring a lower layer using RRC signaling between the second communication node device and the first communication node device. The radio protocol architecture of the user plane 350 comprises the Layer 1 (L1 layer) and the Layer 2 (L2 layer). The radio protocol architecture for the first communication node device and the second communication node device in the user plane 350 is substantially the same as corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 further provides header compression for an upper layer data packet to reduce radio transmission overheads. The L2 layer 355 in the user plane 350 further comprises an SDAP (Service Data Adaptation Protocol) sublayer 356, and the SDAP sublayer 356 is responsible for mapping between a QoS stream and a data radio bearer (DRB) to support diversity of services. Although not shown in the figure, the first communication node device may have several upper layers above the L2 layer 355, comprising a network layer (for example, an IP layer) terminating at a P-GW on a network side and an application layer terminating at another end (for example, remote UE and a server) of connection.

As one embodiment, the wireless protocol architecture in FIG. 3 is applicable to the first node in the present application.

As one embodiment, the wireless protocol architecture in FIG. 3 is applicable to the second node in the present application.

As one embodiment, the first information block is generated in the RRC sublayer 306.

As one embodiment, the first information block is generated in the MAC sublayer 302 or the MAC sublayer 352.

As one embodiment, the first CSI is generated in the PHY301 or the PHY 351.

As one embodiment, the higher layer in the present application refers to a layer above the physical layer.

## Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, an upper layer data packet from a core network is provided to the controller/processor 475. The controller/processor 475 implements functionality of an L2 layer. In a DL, the controller/processor 475 provides header compression, encryption, packet segmentation and reordering, multiplexing between logical and transport channels, and radio resource assignment to the second communication device 450 based on various priority metrics. The controller/processor 475 is further responsible for an HARQ operation, retransmission of a lost packet, and signaling to the second communication device 450. The transmitting processor 416 and the multi-antenna transmitting processor 471 implement various signal processing functions for an L1 layer (namely, a physical layer). The transmitting processor 416 implements encoding and interleaving to facilitate forward error correction (FEC) at the second communication device 450, as well as constellation mapping based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on a coded and modulated symbol to generate one or more parallel streams. The transmitting processor 416 then maps each parallel stream to a subcarrier, multiplexes the modulated symbol with a reference signal (for example, pilot) in a time domain and/or a frequency domain, and then uses an inverse fast Fourier transform (IFFT) to generate a physical channel carrying a time domain multi-carrier symbol stream. The multi-antenna transmitting processor 471 then performs a sending analog precoding/-beamforming operation on the time domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In transmission from the first communication device 410 to the second communication device 450, at the second communication device 450, each receiving device 454 receives a signal through a corresponding antenna 452 of the receiving device. Each receiving device 454 recovers information modulated onto a radio frequency carrier, converts a radio frequency stream into a baseband multi-carrier symbol stream, and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream subjected to the receiving analog precoding/beamforming operation from a time domain to a frequency domain. In a frequency domain, a physical layer data signal and the reference signal are demultiplexed by the receiving processor 456, wherein the reference signal will be used for channel estimation, and the data signal undergoes multi-antenna detection in the multi-antenna receiving processor 458 to recover any parallel stream destined for the second communication device 450. Symbols on each parallel stream are demodulated and recovered in the receiving processor 456, and soft decisions are generated. The receiving processor 456 then decodes and deinterleaves the soft decisions to recover upper layer data and a control signal transmitted by the first communication device 410 on the physical channel. The upper layer data and the control signal are then provided to the controller/processor 459. The controller/processor 459 implements functions of the L2 layer. The controller/processor 459 may be associated with the memory 460 that stores program code and data. The memory 460 may be referred to as computer-readable media. In the DL, the controller/processor 459 provides demultiplexing between transmission and logical channels, packet reassembly, decryption, header decompression, and control signal processing to recover the upper layer data packet from the core network. Subsequently, the upper layer data packet is provided to all protocol layers above the L2 layer. Various control signals may alternatively be provided to an L3 for L3 processing. The controller/processor 459 is further responsible for error detection using an acknowledgement (ACK) and/or negative acknowledgement (NACK) protocol to support the HARQ operation.

In transmission from the second communication device 450 to the first communication device 410, at the second communication device 450, the data source 467 is used for providing the upper layer data packet to the controller/processor 459. The data source 467 represents all protocol layers above the L2 layer. Similar to a sending function at the first communication device 410 described in the DL, the controller/processor 459 implements header compression, encryption, packet segmentation and reordering, and multiplexing between logical and transport channels based on radio resource assignment of the first communication device 410, and implements L2 layer functions for the user plane and the control plane. The controller/processor 459 is further responsible for an HARQ operation, retransmission of a lost packet, and signaling to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates a generated parallel stream into a multi-carrier/single-carrier symbol stream, which undergoes an analog precoding/beamforming operation in the multi-antenna transmitting processor 457 and is then provided to different antennas 452 via the transmitting device 454. Each transmitting device 454 first converts a baseband symbol stream provided by the multi-antenna transmitting processor 457 into a radio frequency symbol stream, and then provides the radio frequency symbol stream to the antenna 452.

In transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through a corresponding antenna 420 of the receiving device, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores program code and data. The memory 476 may be referred to as computer-readable media. The controller/processor 475 provides multiplexing between transport and logical channels, packet reassembly, decryption, header decompression, and control signal processing to recover an upper layer data packet from the second communication device 450. The upper layer data packet from the controller/processor 475 may be provided to the core network. The controller/processor 475 is further responsible for error detection using the ACK and/or NACK protocol to support the HARQ operation.

As one embodiment, the second communication device 450 comprises: at least one processor and at least one memory, wherein the at least one memory comprises computer program code; and the at least one memory and the computer program code are configured to be used together with the at least one processor. The second communication device 450 apparatus at least receives the first information block; and sends the first CSI. The first information block is used for determining a first RS resource set, and the first RS resource set comprises one or more RS resources; and a measurement for the first RS resource set is used for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

As one embodiment, the second communication device 450 comprises: a memory storing a computer-readable instruction program, wherein the computer-readable instruction program generates actions when executed by at least one processor, and the actions comprise: receiving the first information block; and sending the first CSI.

As one embodiment, the first communication device 410 comprises at least one processor and at least one memory, wherein the at least one memory comprises computer program code; and the at least one memory and the computer program code are configured to be used together with the at least one processor. The first communication device 410 apparatus at least sends the first information block; and receives the first CSI. The first information block is used for determining a first RS resource set, and the first RS resource set comprises one or more RS resources; and a measurement for the first RS resource set is used for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

As one embodiment, the first communication device 410 comprises: a memory storing a computer-readable instruction program, wherein the computer-readable instruction program generates actions when executed by at least one processor, and the actions comprise: sending the first information block; and receiving the first CSI.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first information block; and at least one of {the antenna 420, the transmitting device 418, the transmitting processor 416, the multi-antenna transmitting processor 471, the controller/processor 475, and the memory 476} is used for sending the first information block.

As one embodiment, at least one of {the antenna 420, the receiving device 418, the receiving processor 470, the multi-antenna receiving processor 472, the controller/processor 475, and the memory 476} is used for receiving the first CSI; and at least one of {the antenna 452, the transmitting device 454, the transmitting processor 468, the multi-antenna transmitting processor 457, the controller/processor 459, the memory 460, and the data source 467} is used for sending the first CSI.

## Embodiment 5

Embodiment 5 illustrates a flowchart of transmission according to one embodiment of the present application, as shown in FIG. 5. In FIG. 5, a second node U1 and a first node U2 are communication nodes for transmission through an air interface. In FIG. 5, a step in block F51 is optional.

For the second node U1, a first information block is sent in step S511; an RS is sent in a first RS resource set in step S5101; and first CSI is received in step S512.

For the first node U2, the first information block is received in step S521; the RS is received in the first RS resource set in step S5201; and the first CSI is sent in step S522.

In Embodiment 5, the first information block is used for determining the first RS resource set by the first node U2, and the first RS resource set comprises one or more RS resources; and a measurement for the first RS resource set is used by the first node U2 for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

As one embodiment, the first node U2 is the first node in the present application.

As one embodiment, the second node U1 is the second node in the present application.

As one embodiment, the air interface between the second node U1 and the first node U2 comprises a wireless interface between a base station device and user equipment.

As one embodiment, the air interface between the second node U1 and the first node U2 comprises a wireless interface between a relay node device and user equipment.

As one embodiment, the air interface between the second node U1 and the first node U2 comprises a wireless interface between user equipment and user equipment.

As one embodiment, the second node U1 is a serving cell maintaining base station of the first node U2.

As one embodiment, the first information block is transmitted on a PDSCH (Physical Downlink Shared Channel).

As one embodiment, the first CSI is transmitted on a PUSCH (Physical Uplink Shared Channel).

As one embodiment, the first CSI is transmitted on a PUCCH (Physical Uplink Control Channel).

As one embodiment, the step in block F51 in FIG. 5 exists; and the above-mentioned method used for a first node in wireless communication comprises: receiving an RS in a first RS resource set.

As one embodiment, the step in block F51 in FIG. 5 exists; and the above-mentioned method used for a second node in wireless communication comprises: sending an RS in a first RS resource set.

As one embodiment, the first node receives the RS in each RS resource in the first RS resource set.

As one embodiment, the first node receives the RS in at least one RS resource in the first RS resource set.

As one embodiment, the first bit group depends on first compressed CSI, and the measurement for the first RS resource set is used for generating the first compressed CSI; and the first compressed CSI satisfies at least one of the following:

> a channel parameter recovered by a sender of the first RS resource set based on the first compressed CSI is unknown to the first node;
> a channel parameter recovered by the first node based on the first compressed CSI is unknown to the sender of the first RS resource set;
> a generator used for generating the first compressed CSI is obtained based on training; and
> the first compressed CSI does not belong to the CSI defined in 3GPP Rel-17, nor does it belong to the CSI defined in versions prior to 3GPP Rel-17.

As one embodiment, the sender of the first RS resource set is a sender of the first information block.

As one embodiment, the sender of the first RS resource set is a target recipient of the first CSI.

As one embodiment, the sender of the first RS resource set is the second node.

As one embodiment, the channel parameter comprises a channel matrix.

As one embodiment, the channel parameter comprises an original channel matrix.

As one embodiment, any element in the original channel matrix comprises information about a channel experienced on a frequency unit by an RS transmitted on an RS port in the first RS resource set.

As one sub-embodiment of the above-mentioned embodiment, the frequency unit is one sub-band.

As one sub-embodiment of the above-mentioned embodiment, the frequency unit is one RB.

As one sub-embodiment of the above-mentioned embodiment, the frequency unit consists of a plurality of consecutive RBs.

As one sub-embodiment of the above-mentioned embodiment, the frequency unit is one subcarrier.

As one sub-embodiment of the above-mentioned embodiment, the frequency unit consists of a plurality of consecutive subcarriers.

As one embodiment, the channel parameter comprises an eigenvector.

As one embodiment, the channel parameter comprises an eigenvalue.

As one embodiment, the channel parameter comprises a precoding matrix or a precoding vector.

As one embodiment, the channel parameter comprises one or more of the following: a relative phase, a relative amplitude, or a relative coefficient between at least two antenna ports.

As one embodiment, the channel parameter comprises a PMI (Precoding Matrix Indicator).

As one embodiment, a generator of the recovered channel parameter is based on training.

As one embodiment, the first node U2 measures an RS transmitted in the first RS resource set to obtain a channel matrix $H_w$, $w = 1, ... , W$, wherein a dimension of the $H_w$ is $R \times T$, the $T$ and the $R$ are a number of transmitting antenna ports and a number of receiving antennas, respectively, and the $W$ is a number of frequency units; and under a condition of using a precoding matrix $V_w$, $w = 1, ... , W$, a precoded channel is $P_w$, $w = 1, ..., W$, and $P_w = H_w \cdot V_w$, wherein a dimension of the $V_w$ is $T \times L$, and the $L$ is a rank or a number of layers.

As one embodiment, the channel parameter comprises $H_w$, $w = 1, ..., W$ or $V_w$, $w = 1, ... , W$.

As one embodiment, the first bit group is generated after the first compressed CSI is quantized.

As one embodiment, the first bit group comprises a plurality of bit blocks, and each bit block in the first bit group comprises a plurality of bits; the position of the target bit refers to a position of the target bit in a first bit block; the first bit block is a bit block among the plurality of bit blocks that comprises the target bit; and bits in each of the plurality of bit blocks are arranged in sequence from an MSB(most significant bit) to an LSB (least significant bit).

As one sub-embodiment of the above-mentioned embodiment, the first compressed CSI comprises a plurality of scalars or at least one vector, and any bit block in the plurality of bit blocks is generated after one scalar or vector in the first compressed CSI is quantized.

As one embodiment, the measurement for the first RS resource set is used for generating an input of a first encoder, and an output of the first encoder is used for generating the first CSI; and the output of the first encoder satisfies at least one of the following:

a channel parameter recovered by a sender of the first RS resource set based on the output of the first encoder is unknown to the first node;
a channel parameter recovered by the first node based on the output of the first encoder is unknown to the sender of the first RS resource set; and
the output of the first encoder does not belong to the CSI defined in 3GPP Rel-17, nor does it belong to the CSI defined in versions prior to 3GPP Rel-17.

As one embodiment, the output of the first encoder comprises the first parameter group, and the first parameter group is not reported.

As one embodiment, the first CSI only carries M0 bit subgroups with the highest priority among the M bit subgroups, and the M0 is less than the M; a first reference value depends on a total number of bits comprised in the M0 bit subgroups, and the first reference value is not greater than a first threshold; a second reference value depends on a total number of bits comprised in (M0+1) bit subgroups, the second reference value is greater than the first threshold, and the (M0+1) bit subgroups are (M0+1) bit subgroups with the highest priority among the M bit subgroups; and the first threshold is a positive integer.

As one embodiment, the first CSI only comprises the M0 bit subgroups with the highest priority among the M bit subgroups.

As one embodiment, the first CSI does not carry any bit subgroup among the M bit subgroups that does not belong to the M0 bit subgroups.

As one embodiment, the first CSI does not comprise any bit subgroup among the M bit subgroups that does not belong to the M0 bit subgroups.

As one embodiment, the first node abandons reporting each bit subgroup among the M bit subgroups that does not belong to the M0 bit subgroups on a PUSCH carrying the first CSI.

As one embodiment, the first node abandons reporting each bit subgroup among the M bit subgroups that does not belong to the M0 bit subgroups in the first CSI.

As one embodiment, a priority of any bit subgroup among the M bit subgroups that does not belong to the M0 bit subgroups is lower than a priority of any bit subgroup among the M0 bit subgroups.

As one embodiment, a priority of any bit subgroup among the M bit subgroups that does not belong to the (M0+1) bit subgroups is lower than a priority of any bit subgroup among the (M0+1) bit subgroups.

As one embodiment, the (M0+1) bit subgroups consist of the M0 bit subgroups and a third given bit subgroup, and the third given bit subgroup is a bit subgroup with the highest priority among the M bit subgroups that does not belong to the M0 bit subgroups.

As one embodiment, the M0 is the largest integer that is not greater than the M and makes the first reference value not greater than the first threshold.

As one embodiment, the M0 bit subgroups are jointly encoded.

As one embodiment, the M0 bit subgroups are respectively encoded.

As one embodiment, the first CSI carries a second bit group, and the measurement for the first RS resource set is used for generating the second bit group; the second bit group has a higher priority than the M bit subgroups; and the second bit group is used for determining a number of bits comprised in the first bit group.

## Embodiment 6

Embodiment 6 illustrates a schematic diagram of a bit subgroup among M bit subgroups to which a target bit belongs depending on a position of the target bit according to one embodiment of the present application, as shown in FIG. 6. In Embodiment 6, bits in the first bit group are arranged in sequence, the target bit is an $n^{th}$ bit in the first bit group, the target bit belongs to a $p^{th}$ bit subgroup among the M bit subgroups, and p is a positive integer not greater than M; and the p depends on the n. In FIG. 6, the bits in the first bit group are represented as bit #0, bit #1, ....

As one embodiment, the benefits of the above-mentioned method comprise: simplifying the determination of a priority of a CSI report, thereby reducing implementation complexity.

As one embodiment, the benefits of the above-mentioned method comprise: minimal changes to standards and good backward compatibility.

As one embodiment, the $n^{th}$ bit is represented as a bit #(n-1).

As one embodiment, a value range of the p is from 1 to the M.

As one embodiment, the p depends on (M-1) thresholds, and the (M-1) thresholds are respectively pairwise distinct positive integers.

As one embodiment, the p depends on the n and the (M-1) thresholds.

As one embodiment, the p depends on a magnitude relationship between the (M-1) thresholds and the n.

As one embodiment, the p depends on a first numerical value, and the first numerical value is the n.

As one embodiment, the p depends on a first numerical value, and the first numerical value is equal to mod(n-1, M).

As one embodiment, the p depends on the (M-1) thresholds and the first numerical value.

As one embodiment, the p depends on a magnitude relationship between the (M-1) thresholds and the first numerical value.

As one embodiment, if the first numerical value is less than a $1^{st}$ threshold in the (M-1) thresholds, the p is equal to 1.

As one embodiment, if the first numerical value is less than or equal to a $1^{st}$ threshold in the (M-1) thresholds, the p is equal to 1.

As one embodiment, if the first numerical value is not less than an $i^{th}$ threshold in the (M-1) thresholds and less than an $(i+1)^{th}$ threshold in the (M-1) thresholds, the p is equal to i+1; and the i is any positive integer less than the M.

As one embodiment, if the first numerical value is greater than an $i^{th}$ threshold in the (M-1) thresholds and not greater than an $(i+1)^{th}$ threshold in the (M-1) thresholds, the p is equal to i+1; and the i is any positive integer less than the M.

As one embodiment, if the first numerical value is not less than an $i^{th}$ threshold in the (M-1) thresholds and not greater than an $(i+1)^{th}$ threshold in the (M-1) thresholds, the p is equal to i+1; and the i is any positive integer less than the M.

As one embodiment, if the first numerical value is greater than an $i^{th}$ threshold in the (M-1) thresholds and less than an $(i+1)^{th}$ threshold in the (M-1) thresholds, the p is equal to i+1; and the i is any positive integer less than the M.

As one embodiment, if the first numerical value is greater than an $(M-1)^{th}$ threshold in the (M-1) thresholds, the p is equal to the M.

As one embodiment, if the first numerical value is not less than an $(M-1)^{th}$ threshold in the (M-1) thresholds, the p is equal to the M.

As one embodiment, the (M-1) thresholds are arranged in an ascending order.

As one embodiment, the (M-1) thresholds are fixed.

As one embodiment, the (M-1) thresholds are pre-configured.

As one embodiment, the (M-1) thresholds do not need to be configured.

As one embodiment, the benefits of the above-mentioned method comprise: saving signaling overheads, and simplifying a system design.

As one embodiment, the (M-1) thresholds are configurable.

As one embodiment, the (M-1) thresholds are configured through a higher-layer parameter.

As one embodiment, the (M-1) thresholds are indicated by a sender of the first RS resource set to the first node.

As one embodiment, the benefits of the above-mentioned method comprise: a more flexible design, optimized performance, and good forward compatibility.

As one embodiment, the (M-1) thresholds are determined by the first node itself.

As one embodiment, the benefits of the above-mentioned method comprise: being capable of adapting to various different terminals, thereby saving signaling overheads.

As one embodiment, the (M-1) thresholds are respectively equal to products of (M-1) ratios and a number of bits comprised in the first bit group.

As one embodiment, the (M-1) thresholds are respectively equal to rounded products of (M-1) ratios and a number of bits comprised in the first bit group.

As one embodiment, the p depends on a first ratio, and the first ratio is a ratio of the n and a number of bits comprised in the first bit group.

As one embodiment, the p depends on the first ratio and (M-1) ratios, and the (M-1) ratios are respectively pairwise distinct positive real numbers.

As one embodiment, the p depends on a magnitude relationship between the (M-1) ratios and the first ratio.

As one embodiment, if the first ratio is less than a $1^{st}$ ratio in the (M-1) ratios, the p is equal to 1.

As one embodiment, if the first ratio is less than or equal to a $1^{st}$ ratio in the (M-1) ratios, the p is equal to 1.

As one embodiment, if the first ratio is not less than an $i^{th}$ ratio in the (M-1) ratios and is less than an $(i+1)^{th}$ ratio in the (M-1) ratios, the p is equal to i+1; and the i is any positive integer less than the M.

As one embodiment, if the first ratio is greater than an $i^{th}$ ratio in the (M-1) ratios and not greater than an $(i+1)^{th}$ ratio in the (M-1) ratios, the p is equal to i+1; and the i is any positive integer less than the M.

As one embodiment, if the first ratio is not less than an $i^{th}$ ratio in the (M-1) ratios and not greater than an $(i+1)^{th}$ ratio in the (M-1) ratios, the p is equal to i+1; and the i is any positive integer less than the M.

As one embodiment, if the first ratio is greater than the an $i^{th}$ ratio in the (M-1) ratios and is less than an $(i+1)^{th}$ ratio in the (M-1) ratios, the p is equal to i+1; and the i is any positive integer less than the M.

As one embodiment, if the first ratio is greater than an $(M-1)^{th}$ ratio in the (M-1) ratios, the p is equal to the M.

As one embodiment, if the first ratio is not less than an $(M-1)^{th}$ ratio in the (M-1) ratios, the p is equal to the M.

As one embodiment, the (M-1) ratios are arranged in an ascending order.

As one embodiment, a sum of the (M-1) ratios is less than 1.

As one embodiment, the (M-1) ratios are fixed.

As one embodiment, the (M-1) ratios are pre-configured.

As one embodiment, the (M-1) ratios do not need to be configured.

As one embodiment, the benefits of the above-mentioned method comprise: saving signaling overheads, and simplifying a system design.

As one embodiment, the (M-1) ratios are configurable.

As one embodiment, the (M-1) ratios are indicated by a sender of the first RS resource set to the first node.

As one embodiment, the (M-1) ratios are configured through a higher-layer parameter.

As one embodiment, the benefits of the above-mentioned method comprise: a more flexible design, optimized performance, and good forward compatibility.

As one embodiment, the (M-1) ratios are determined by the first node itself.

As one embodiment, the benefits of the above-mentioned method comprise: being capable of adapting to various different terminals, thereby saving signaling overheads.

As one embodiment, the target bit is an $n^{th}$ bit in the first bit group, the target bit belongs to a $p^{th}$ bit subgroup among the M bit subgroups, and the p is equal to mod(n-1, M).

As one embodiment, the target bit is an $n^{th}$ bit in the first bit group, and if the n is an odd number, the target bit belongs to a first given bit subgroup; or if the n is an even number, the target bit belongs to a second given bit subgroup.

As one embodiment, the first given bit subgroup and the second given bit subgroup are respectively one bit subgroup among the M bit subgroups, and the first given bit subgroup is different from the second given bit subgroup.

As one embodiment, the first given bit subgroup has a higher priority than the second given bit subgroup.

As one embodiment, the second given bit subgroup has a higher priority than the first given bit subgroup.

As one embodiment, the M is equal to 2, and the M bit subgroups consist of the first given bit subgroup and the second given bit subgroup.

As one embodiment, the M is greater than 2, and the M bit subgroups consist of at least one bit subgroup other than the first given bit subgroup and the second given bit subgroup.

As one embodiment, the target bit is any bit in the first bit group, and the n is any positive integer not greater than the M.

## Embodiment 7

Embodiment 7 illustrates a schematic diagram of a bit subgroup among M bit subgroups to which a target bit belongs depending on a first parameter according to one embodiment of the present application, as shown in FIG. 7. In Embodiment 7, the target bit belongs to a $p^{th}$ bit subgroup among the M bit subgroups, and the p depends on the first parameter.

As one embodiment, the essence of the above-mentioned method comprises: a parameter corresponding to each bit in the first bit group represents an importance of the bit, and a bit with a higher importance has a higher priority.

As one embodiment, the benefits of the above-mentioned method comprise: a CSI report is optimized, and system performance is improved.

As one embodiment, the benefits of the above-mentioned method comprise: having good forward compatibility.

As one embodiment, the p depends on the first parameter and (M-1) thresholds, and the (M-1) thresholds are not equal to each other.

As one embodiment, the p depends on a magnitude relationship between the (M-1) thresholds and the first parameter.

As one embodiment, the (M-1) thresholds are arranged in an ascending order.

As one sub-embodiment of the above-mentioned embodiment, if the first parameter is less than a $1^{st}$ threshold in the (M-1) thresholds, the p is equal to 1.

As one sub-embodiment of the above-mentioned embodiment, if the first parameter is less than or equal to a $1^{st}$ threshold in the (M-1) thresholds, the p is equal to 1.

As one sub-embodiment of the above-mentioned embodiment, if the first parameter is not less than an $i^{th}$ threshold in the (M-1) thresholds and less than an $(i+1)^{th}$ threshold in the (M-1) thresholds, the p is equal to i+1; and the i is any positive integer less than the M.

As one sub-embodiment of the above-mentioned embodiment, if the first parameter is greater than an $i^{th}$ threshold in the (M-1) thresholds and not greater than an $(i+1)^{th}$ threshold in the (M-1) thresholds, the p is equal to i+1; and the i is any positive integer less than the M.

As one sub-embodiment of the above-mentioned embodiment, if the first parameter is not less than an $i^{th}$ threshold in the (M-1) thresholds and not greater than an $(i+1)^{th}$ threshold in the (M-1) thresholds, the p is equal to i+1; and the i is any positive integer less than the M.

As one sub-embodiment of the above-mentioned embodiment, if the first parameter is greater than an $i^{th}$ threshold in the (M-1) thresholds and less than an $(i+1)^{th}$ threshold in the (M-1) thresholds, the p is equal to i+1; and the i is any positive integer less than the M.

As one sub-embodiment of the above-mentioned embodiment, if the first parameter is greater than an $(M-1)^{th}$ threshold in the (M-1) thresholds, the p is equal to the M.

As one sub-embodiment of the above-mentioned embodiment, if the first parameter is not less than an $(M-1)^{th}$ threshold in the (M-1) thresholds, the p is equal to the M.

As one embodiment, the (M-1) thresholds are arranged in a descending order.

As one sub-embodiment of the above-mentioned embodiment, if the first parameter is greater than a $1^{st}$ threshold in the (M-1) thresholds, the p is equal to 1.

As one sub-embodiment of the above-mentioned embodiment, if the first parameter is greater than or equal to a $1^{st}$ threshold in the (M-1) thresholds, the p is equal to 1.

As one sub-embodiment of the above-mentioned embodiment, if the first parameter is not greater than an $i^{th}$ threshold in the (M-1) thresholds and greater than an $(i+1)^{th}$ threshold in the (M-1) thresholds, the p is equal to i+1; and the i is any positive integer less than the M.

As one sub-embodiment of the above-mentioned embodiment, if the first parameter is less than an $i^{th}$ threshold in the (M-1) thresholds and not less than an $(i+1)^{th}$ threshold in the (M-1) thresholds, the p is equal to i+1; and the i is any positive integer less than the M.

As one sub-embodiment of the above-mentioned embodiment, if the first parameter is not greater than an $i^{th}$ threshold in the (M-1) thresholds and not less than an $(i+1)^{th}$ threshold in the (M-1) thresholds, the p is equal to i+1; and the i is any positive integer less than the M.

As one sub-embodiment of the above-mentioned embodiment, if the first parameter is less than an $i^{th}$ threshold in the (M-1) thresholds and greater than an $(i+1)^{th}$ threshold in the (M-1) thresholds, the p is equal to i+1; and the i is any positive integer less than the M.

As one sub-embodiment of the above-mentioned embodiment, if the first parameter is less than an $(M-1)^{th}$ threshold in the (M-1) thresholds, the p is equal to the M.

As one sub-embodiment of the above-mentioned embodiment, if the first parameter is not greater than an $(M-1)^{th}$ threshold in the (M-1) thresholds, the p is equal to the M.

As one embodiment, the (M-1) thresholds are respectively a real number.

As one embodiment, the (M-1) thresholds are respectively a non-negative integer.

As one embodiment, the (M-1) thresholds are fixed.

As one embodiment, the (M-1) thresholds are configurable.

As one embodiment, the (M-1) thresholds are configured through a higher-layer parameter.

As one embodiment, the (M-1) thresholds do not need to be configured.

As one embodiment, the (M-1) thresholds are determined by the first node itself.

As one embodiment, the (M-1) thresholds are indicated by a sender of the first RS resource set to the first node.

As one embodiment, if the first parameter is less than a second numerical value, the target bit belongs to a first given bit subgroup; or if the first parameter is not less than the second numerical value, the target bit belongs to a second given bit subgroup; and the second numerical value is a real number.

As one embodiment, if the first parameter is less than or equal to the second numerical value, the target bit belongs to a first given bit subgroup; or if the first parameter is greater than the second numerical value, the target bit belongs to a second given bit subgroup; and the second numerical value is a real number.

As one embodiment, if the first parameter is equal to a second numerical value, the target bit belongs to a first given bit subgroup; or if the first parameter is not equal to the second numerical value, the target bit belongs to a second given bit subgroup; and the second numerical value is a real number.

As one embodiment, the second numerical value is a non-negative integer.

As one embodiment, the second numerical value is configurable.

As one embodiment, the second numerical value is configured through a higher-layer parameter.

As one embodiment, the second numerical value is indicated by a sender of the first RS resource set to the first node.

As one embodiment, the second numerical value is fixed.

As one embodiment, the second numerical value is determined by the first node itself.

As one embodiment, the M bit subgroups are in one-to-one correspondence with M numerical values, the first parameter is equal to a $p^{th}$ numerical value among the M numerical values, and the target bit belongs to a $p^{th}$ bit subgroup among the M bit subgroups; and the M numerical values are pairwise distinct from each other.

As one embodiment, the M numerical values are respectively a real number.

As one embodiment, the M numerical values are respectively a non-negative integer.

As one embodiment, the M numerical values are respectively 0, 1, ..., and M-1.

As one embodiment, the M numerical values are respectively 1, 2, ..., and M.

As one embodiment, a value range of each parameter in the first parameter group is from 0 to M-1.

As one embodiment, a value range of each parameter in the first parameter group is from 1 to M.

As one embodiment, the M numerical values are configurable.

As one embodiment, the M numerical values are indicated by a sender of the first RS resource set to the first node.

As one embodiment, the M numerical values do not need to be configured.

## Embodiment 8

Embodiment 8 illustrates a schematic diagram of a first encoder according to one embodiment of the present application, as shown in FIG. 8. In Embodiment 8, a measurement for the first RS resource set is used by the first node for generating an input of the first encoder, and an output of the first encoder is used by the first node for generating the first CSI.

As one embodiment, the benefits of the above-mentioned method comprise: better backward compatibility and minimal changes to standards.

As one embodiment, the benefits of the above-mentioned method comprise: having better flexibility and being capable of adapting to various different terminals.

As one embodiment, the output of the first encoder is used for generating the first bit group.

As one embodiment, the output of the first encoder comprises the first bit group.

As one embodiment, the output of the first encoder is the first bit group.

As one embodiment, the essence of the above-mentioned method comprises: quantization and compression are jointly optimized. The benefits of the above-mentioned method comprise: improving system performance.

As one embodiment, the output of the first encoder comprises the first compressed CSI.

As one embodiment, the output of the first encoder is the first compressed CSI.

As one embodiment, the benefits of the above-mentioned method comprise: having a better design and adapting to different terminals.

As one embodiment, the benefits of the above-mentioned method comprise: simplified complexity.

As one embodiment, the benefits of the above-mentioned method comprise: good backward compatibility.

As one embodiment, the first RS resource set is used for obtaining a channel measurement used for calculating the input of the first encoder.

As one embodiment, the first RS resource set is used for obtaining an interference measurement used for calculating the input of the first encoder.

As one embodiment, each RS resource in the first RS resource set is used for obtaining a channel measurement used for calculating the input of the first encoder.

As one embodiment, only part of RS resources in the first RS resource set are used for obtaining a channel measurement used for calculating the input of the first encoder.

As one embodiment, the first node obtains, based on the first RS resource set, a channel measurement used for calculating the input of the first encoder.

As one embodiment, the first node obtains, based on an RS that is in the first RS resource set and that is transmitted no later than a CSI reference resource of the first CSI, a channel measurement used for calculating the input of the first encoder.

As one embodiment, the first node obtains, based on a most recent transmission occasion that is of an RS resource in the first RS resource set and that is not later than a CSI reference resource of the first CSI, a channel measurement used for calculating the input of the first encoder.

As one embodiment, the first node obtains, only based on the first RS resource set, a channel measurement used for calculating the input of the first encoder.

As one embodiment, the first node obtains, only based on a most recent transmission occasion that is of an RS resource in the first RS resource set and that is not later than a CSI reference resource of the first CSI, a channel measurement used for calculating the input of the first encoder.

As one embodiment, the output of the first encoder satisfies at least one of the following:

a channel parameter recovered by a sender of the first RS resource set based on the output of the first encoder is unknown to the first node;
a channel parameter recovered by the first node based on the output of the first encoder is unknown to the sender of the first RS resource set; and
the output of the first encoder does not belong to the CSI defined in 3GPP Rel-17, nor does it belong to the CSI defined in versions prior to 3GPP Rel-17.

As one embodiment, the essence of the above-mentioned method comprises: the first CSI comprises CSI based on artificial intelligence or machine learning.

As one embodiment, the problem to be solved by the present application comprises: how to determine a priority of the CSI based on artificial intelligence or machine learning. The above-mentioned method solves this problem by using the position of the target bit or the corresponding parameter in the first parameter group to determine a priority of the target bit.

As one embodiment, the benefits of the above-mentioned method comprise: solving the problems of determining a priority of the CSI report based on artificial intelligence or machine learning.

As one embodiment, the benefits of the above-mentioned method comprise: being capable of better balancing accuracy and overheads of a CSI report and optimizing a system design.

As one embodiment, the first encoder is nonlinear.

As one embodiment, the first encoder is non-codebook.

As one embodiment, the input of the first encoder comprises CSI.

As one embodiment, the input of the first encoder comprises a channel matrix.

As one embodiment, the input of the first encoder comprises an original channel matrix.

As one embodiment, the input of the first encoder comprises channel matrix information.

As one embodiment, the input of the first encoder comprises a trait vector.

As one embodiment, the input of the first encoder comprises an uncompressed channel matrix or trait vector.

As one embodiment, the input of the first encoder comprises PMI.

As one embodiment, the output of the first encoder comprises compressed CSI.

As one embodiment, the output of the first encoder is used for determining at least one precoding matrix.

As one embodiment, a payload size of any input of the first encoder is greater than a payload size of an output of the first encoder that corresponds to the input.

As one embodiment, the first encoder is based on artificial intelligence or machine learning.

As one embodiment, the first encoder is based on a neural network.

As one embodiment, the first encoder comprises a neural network used for CSI compression.

As one embodiment, the first encoder comprises an encoder of a neural network used for CSI compression.

As one embodiment, the first encoder comprises an encoder that is used for CSI compression and that is based on CNNs (Conventional Neural Networks).

As one embodiment, the first encoder is obtained through training.

As one embodiment, training for obtaining the first encoder is performed at the first node.

As one embodiment, training for obtaining the first encoder is performed at a sender of the first RS resource set.

As one embodiment, the first encoder comprises K1 sub-processes, K1 being a positive integer greater than 1; and the K1 sub-processes comprise one or more of convolution, pooling, concatenation, or activation.

As one embodiment, among the K1 sub-processes, there is one sub-process that comprises a fully connected layer.

As one embodiment, among the K1 sub-processes, there is one sub-process that comprises a pooling layer.

As one embodiment, among the K1 sub-processes, there is one sub-process that comprises at least one convolution layer.

As one embodiment, among the K1 sub-processes, there is one sub-process that comprises at least one encoding layer.

As one embodiment, among the K1 sub-processes, there are two sub-processes that respectively comprise a fully connected layer and at least one encoding layer.

As one embodiment, one encoding layer comprises at least one convolution layer and one pooling layer.

As one embodiment, in the convolution layer, at least one convolution kernel is used for convolving the input of the first encoder to generate a corresponding feature map, and at least one feature map output by the convolution layer is reshaped into one vector to be input into the fully connected layer; and the fully connected layer transforms the vector into the output of the first encoder.

As one embodiment, part or all of a convolution kernel size, a number of convolution layers, a convolution step size, a pooling kernel size, a pooling kernel step size, a pooling function, an activation function, or a number of feature maps of the first encoder are obtained through training.

As one embodiment, part or all of a convolution kernel, a pooling kernel, a pooling function, an activation function, a parameter of the pooling function, or a parameter of the activation function of the first encoder are obtained through training.

As one embodiment, the first encoder is determined by the first node itself.

As one embodiment, the (M-1) thresholds in Embodiment 6 or Embodiment 7 are related to the first encoder.

As one embodiment, the (M-1) thresholds in Embodiment 6 or Embodiment 7 depend on the first encoder.

As one embodiment, training for obtaining the first encoder comprises training on the (M-1) thresholds.

As one embodiment, training for obtaining the first encoder depends on the (M-1) thresholds.

As one embodiment, the (M-1) ratios in Embodiment 6 are related to the first encoder.

As one embodiment, the (M-1) ratios in Embodiment 6 depend on the first encoder.

As one embodiment, training for obtaining the first encoder comprises training on the (M-1) ratios.

As one embodiment, training for obtaining the first encoder depends on the (M-1) ratios.

As one embodiment, the training for obtaining the first encoder is used for obtaining part or all of parameters in the first encoder.

## Embodiment 9

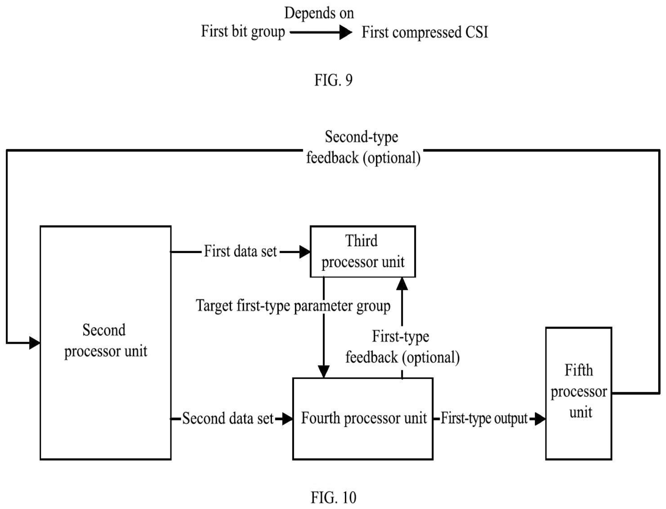

Embodiment 9 illustrates a schematic diagram of a first bit group depending on first compressed CSI according to one embodiment of the present application, as shown in FIG. 9. In Embodiment 9, the first bit group depends on the first compressed CSI; and the first compressed CSI satisfies at least one of the following:

a channel parameter recovered by a sender of the first RS resource set based on the first compressed CSI is unknown to the first node;

a channel parameter recovered by the first node based on the first compressed CSI is unknown to the sender of the first RS resource set;

a generator used for generating the first compressed CSI is obtained based on training; and

the first compressed CSI does not belong to the CSI defined in 3GPP Rel-17, nor does it belong to the CSI defined in versions prior to 3GPP Rel-17.

As one embodiment, the sender of the first RS resource set recovers the channel parameter based on the first compressed CSI through a first decoder, and the first node recovers the channel parameter based on the first compressed CSI through a second decoder. The first decoder and the second decoder are obtained through training respectively.

As one embodiment, the benefits of the above-mentioned method comprise: being able to perform training by the first node and the sender of the first RS resource set on the decoders respectively, saving air interface overheads, providing better flexibility, adapting to different terminals, and having better forward compatibility.

As one embodiment, the first decoder and the second decoder are obtained through different training.

As one embodiment, the first decoder and the second decoder are obtained through independent training.

As one embodiment, the first decoder and the first encoder are obtained through joint training.

As one embodiment, the essence of the above-mentioned method comprises: training of the first encoder is performed at the sender of the first RS resource set. The benefits of the above-mentioned method comprise: optimizing performance.

As one embodiment, training of the second decoder depends on the first encoder.

As one embodiment, the second decoder and the first encoder are obtained through joint training.

As one embodiment, the essence of the above-mentioned method comprises: training of the first encoder is performed at the first node. The benefits of this method comprise: avoiding transmission of training data over an air interface, thereby saving air interface overheads.

As one embodiment, training of the first decoder depends on the first encoder.

As one embodiment, a measurement based on the first RS resource set is used for generating first before-compression CSI. The first before-compression CSI is used as an input of the first encoder by the first node for generating the first compressed CSI. The first compressed CSI is used for generating the first CSI. All or part of information in the first CSI is used as an input of the first decoder by the sender of the first RS resource set for generating first recovered CSI.

As one embodiment, the first recovered CSI comprises a recovery value of the first before-compression CSI.

As one embodiment, the first recovered CSI comprises an estimated value of the first before-compression CSI.

As one embodiment, the first encoder is used for compressing the first before-compression CSI to reduce air interface overheads, and the first decoder is used for performing decompression to recover the first before-compression CSI as much as possible.

As one embodiment, the first decoder is an inverse function of the first encoder.

As one embodiment, the first before-compression CSI comprises a PMI.

As one embodiment, the first before-compression CSI comprises a PMI based on a type II codebook, a type II port selection codebook, an enhanced type II codebook, an enhanced type II port selection codebook, or a further enhanced type II port selection codebook.

As one embodiment, the first before-compression CSI comprises at least one precoding matrix.

As one embodiment, the precoding matrix is in a spatial-frequency domain.

As one embodiment, the precoding matrix is of angular-delay domain projection.

As one embodiment, the first before-compression CSI comprises at least one channel matrix.

As one embodiment, the first before-compression CSI comprises at least one original channel matrix.

As one embodiment, the channel matrix is in a spatial-frequency domain.

As one embodiment, the channel matrix is of angular-delay domain projection.

As one embodiment, the first before-compression CSI comprises at least one eigenvector.

As one embodiment, the first before-compression CSI comprises at least one eigenvector and at least one eigenvalue.

As one embodiment, the first before-compression CSI is used for determining a relative phase, amplitude, or coefficient between at least two antenna ports.

As one embodiment, the training is based on a training dataset, a measurement for a first-type wireless signal is used for generating the training dataset, and the first-type wireless signal comprises a downlink RS.

As one embodiment, the first compressed CSI is used for generating the first bit group.

As one embodiment, the first bit group carries the first compressed CSI.

As one embodiment, the first bit group comprises the first compressed CSI.

As one embodiment, the first bit group is generated after the first compressed CSI is quantized.

As one embodiment, the first CSI depends on the first compressed CSI.

As one embodiment, the first CSI carries the first compressed CSI.

As one embodiment, the first CSI comprises the first compressed CSI.

As one embodiment, the first compressed CSI is used for generating the first CSI.

As one embodiment, a measurement for the first RS resource set is used for generating the first compressed CSI.

As one embodiment, the first RS resource set is used for obtaining a channel measurement used for calculating the first compressed CSI.

As one embodiment, the first node obtains, only based on the first RS resource set, a channel measurement used for calculating the first compressed CSI.

As one embodiment, the first compressed CSI is based on non-codebook.

As one embodiment, the first compressed CSI comprises precoding information based on non-codebook.

As one embodiment, the first compressed CSI is used for determining at least one precoding matrix.

As one embodiment, the first compressed CSI indicates at least one precoding matrix.

As one embodiment, the precoding matrix is in a spatial-frequency domain.

As one embodiment, the precoding matrix is of angular-delay domain projection.

As one embodiment, the first compressed CSI comprises a PMI.

As one embodiment, the first compressed CSI is used for determining at least one channel matrix.

As one embodiment, the first compressed CSI indicates at least one channel matrix.

As one embodiment, the first compressed CSI is used for determining at least one original channel matrix.

As one embodiment, the channel matrix is in a spatial-frequency domain.

As one embodiment, the channel matrix is of angular-delay domain projection.

As one embodiment, the precoding matrix comprises $V_W$, $w = 1, ..., W$ in Embodiment 5.

As one embodiment, the channel matrix comprises $H_W$, $w = 1, ..., W$ in Embodiment 5.

As one embodiment, the first compressed CSI is used for determining a relative phase, amplitude, or coefficient between at least two antenna ports.

As one embodiment, the first compressed CSI is used for determining at least one trait vector.

As one embodiment, the first compressed CSI is used for determining at least one trait value.

As one embodiment, the output of the first encoder comprises the first compressed CSI.

As one embodiment, the first encoder outputs each element of the first compressed CSI in sequence.

As one embodiment, the first compressed CSI is the output of the first encoder.

As one embodiment, a generator used for generating the first compressed CSI is the first encoder.

As one embodiment, the first compressed CSI comprises a plurality of scalars.

As one embodiment, the first compressed CSI consists of a plurality of scalars.

As one embodiment, the first compressed CSI comprises a first scalar group, and the first scalar group comprises a plurality of scalars.

As one embodiment, the scalars in the first scalar group are arranged in sequence.

As one embodiment, the first compressed CSI is the first scalar group.

As one embodiment, each scalar in the first scalar group is one plural number.

As one embodiment, each scalar in the first scalar group is one real number.

As one embodiment, the first compressed CSI is one vector.

As one embodiment, the first compressed CSI comprises a plurality of vectors.

As one embodiment, the first compressed CSI consists of a plurality of vectors.

As one embodiment, the first compressed CSI comprises a first vector group, and the first vector group comprises a plurality of vectors.

As one embodiment, the vectors in the first vector group are arranged in sequence.

As one embodiment, the first compressed CSI is the first vector group.

As one embodiment, each element in each vector in the first vector group is one plural number.

As one embodiment, each element in each vector in the first vector group is one real number.

As one embodiment, any two vectors in the first vector group have the same dimension.

As one embodiment, there are two vectors in the first vector group that have the same dimension.

As one embodiment, there are two vectors in the first vector group that have different dimensions.

As one embodiment, a dimension of one vector refers to a number of elements comprised in the vector.

## Embodiment 10

Embodiment 10 illustrates a schematic diagram of a processing system based on artificial intelligence or machine learning according to one embodiment of the present application, as shown in FIG. 10. FIG. 10 comprises a second processor unit, a third processor unit, a fourth processor unit, and a fifth processor unit. In Embodiment 10, the second processor unit sends a first dataset to the third processor unit and sends a second dataset to the fourth processor unit; the third processor unit generates a target first-type parameter group based on the first dataset, and the third processor unit sends the generated target first-type parameter group to the fourth processor unit; and the fourth processor unit processes the second dataset by using the target first-type parameter group to obtain a first-type output, and the fourth processor unit sends the first-type output to the fifth processor unit. In FIG. 10, first-type feedback and second-type feedback are optional.

As one embodiment, the fourth processor unit comprises the first encoder.

As one embodiment, the fifth processor unit comprises the first decoder.

As one embodiment, the fourth processor unit sends the first-type feedback to the third processor unit, and the first-type feedback is used for triggering recalculation or update of the target first-type parameter group.

As one embodiment, the fifth processor unit sends the second-type feedback to the second processor unit, and the second-type-feedback is used for generating the first dataset or the second dataset, or the second-type-feedback is used for triggering transmission of the first dataset or the second dataset.

As one embodiment, the second processor unit generates the first dataset and the second dataset based on a measurement for a first-type wireless signal, and the first-type wireless signal comprises a downlink RS.

As one embodiment, the fourth processor unit belongs to the first node, and the fifth processor unit belongs to the second node.

As one embodiment, the first compressed CSI belongs to the first-type output.

As one embodiment, the first before-compression CSI belongs to the second dataset.

As one embodiment, the third processor unit belongs to the first node.

The above-mentioned embodiment avoids transmitting the first dataset to the second node.

As one embodiment, the third processor unit belongs to the second node.

The above-mentioned embodiment supports joint training, thereby optimizing system performance.

As one embodiment, the first dataset comprises training data, the second dataset comprises inference data, the third processor unit is used for model training, and a trained model is described by the target first-type parameter group.

Descriptions of the above-mentioned training is applicable to the first encoder and the first decoder in the present application.

As one embodiment, the fourth processor unit constructs a model based on the target first-type parameter group, and then inputs the second dataset into the constructed model to obtain the first-type output.

As one embodiment, the first encoder is described by the target first-type parameter group.

As one embodiment, the target first-type parameter group is used for constructing the first encoder.

As one embodiment, the fourth processor unit comprises the second decoder.

As one embodiment, the fourth processor unit generates a recovery dataset based on the first-type output, and an error between the recovery dataset and the second dataset is used for generating the first-type feedback.

As one sub-embodiment of the above-mentioned embodiment, generation of the recovery dataset is similar to that of the second decoder.

As one embodiment, the first-type feedback is used for reflecting performance of the trained model; and when the performance of the trained model does not satisfy a requirement, the third processor unit recalculates the target first-type parameter group.

As one embodiment, when an error is too large or update has not been performed for too long, the performance of the trained model is considered to be unsatisfactory.

As one embodiment, the fourth processor unit belongs to the second node, and the first node reports the target first-type parameter group to the second node.

As one embodiment, the target first-type parameter group comprises one or more of a convolution kernel size, a number of convolution layers, a convolution step size, a pooling kernel size, a pooling kernel step size, a pooling function, an activation function, or a number of feature maps.

As one embodiment, the target-first type parameter group comprises one or more of a convolution kernel, a pooling kernel, a pooling function, an activation function, a parameter of the pooling function, or a parameter of the activation function.

## Embodiment 11

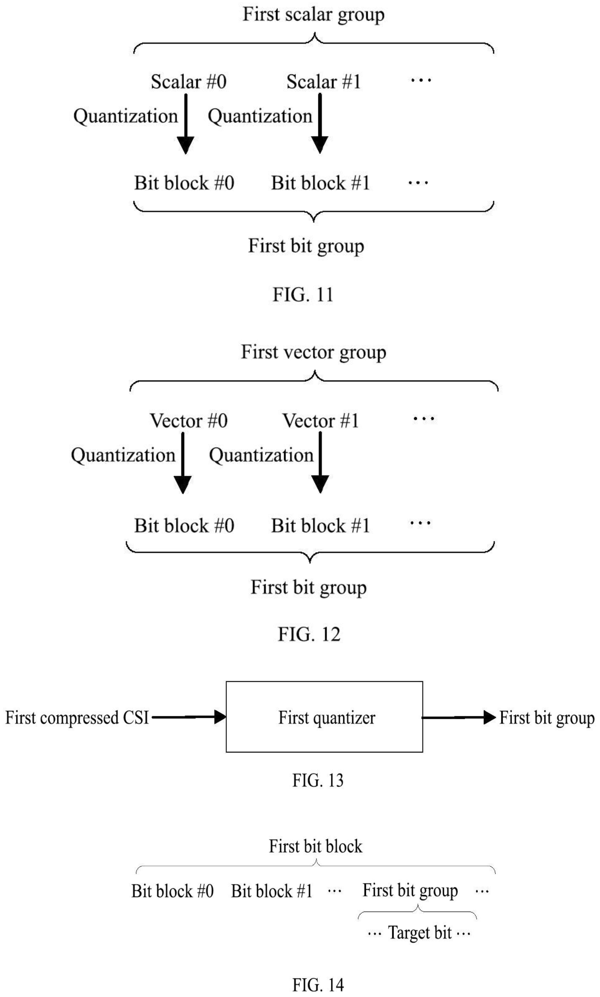

Embodiment 11 illustrates a schematic diagram of a first bit group generated after the first compressed CSI is quantized according to one embodiment of the present application, as shown in FIG. 11. In Embodiment 11, the first compressed CSI comprises a first scalar group, and the first scalar group comprises a plurality of scalars; and the first bit group is obtained after the first scalar group is quantized. In FIG. 11, scalars in the first scalar group are represented as a scalar #0, a scalar #1, and ...; and the first bit group in FIG. 11 comprises a bit block #0, a bit block #1, and ....

As one embodiment, the bit block #0, the bit block #1, and ..., are obtained after the scalar #0, the scalar #1, and ... are quantized respectively.

As one embodiment, the scalar #0, the scalar #1, and ... are mapped to the bit block #0, the bit block #1, and ..., respectively through quantization.

As one embodiment, the first bit group is obtained after each scalar in the first scalar group is quantized.

As one embodiment, any bit in the first bit group depends on one scalar in the first scalar group.

As one embodiment, any bit in the first bit group is obtained after one scalar in the first scalar group is quantized.

As one embodiment, each scalar in the first scalar group is mapped to one bit block, and any bit in the first bit group is one bit in the bit block to which one scalar in the first scalar group is mapped.

As one embodiment, each scalar in the first scalar group is mapped to one bit block, and the first bit group consists of a bit block to which each scalar in the first scalar group is mapped.

As one embodiment, each scalar in the first scalar group is mapped to one bit block through quantization.

As one embodiment, a bit block to which each scalar in the first scalar group is mapped comprises a same number of bits.

As one embodiment, a number of parameters comprised in the first parameter group is equal to a number of scalars comprised in the first scalar group.

As one sub-embodiment of the above-mentioned embodiment, parameters in the first parameter group are in one-to-one correspondence to scalars in the first scalar group.

As one embodiment, each bit in the first bit group corresponds to a parameter that is in the first parameter group and that corresponds to a scalar on which the bit depends.

As one embodiment, the first parameter is a parameter that is in the first parameter group and that corresponds to a scalar on which the target bit depends.

As one embodiment, for any bit in the first bit group, the bit is one bit in a bit block to which one scalar in the first scalar group is mapped, and the bit corresponds to a parameter that is in the first parameter group and that corresponds to the scalar.

As one embodiment, the target bit is one bit in a bit block to which one scalar in the first scalar group is mapped, and the first parameter is a parameter that is in the first parameter group and that corresponds to the scalar.

As one embodiment, the first parameter group indicates an importance of each scalar in the first scalar group.

As one embodiment, the benefits of the above-mentioned method comprise: optimizing a CSI report, and improving report accuracy.

As one embodiment, the benefits of the above-mentioned method comprise: supporting quantization based on a scalar, simplifying complexity, and being capable of adapting to various terminals.

As one embodiment, an amplitude and a phase of each scalar in the first scalar group are quantized respectively.

## Embodiment 12

Embodiment 12 illustrates a schematic diagram of a first bit group generated after the first compressed CSI is quantized according to one embodiment of the present application, as shown in FIG. 12. In Embodiment 12, the first compressed CSI comprises a first vector group, and the first vector group comprises a plurality of vectors; and the first bit group is obtained through quantization of the first vector group. In FIG. 12, vectors in the first vector group are represented as a vector #0, a vector #1, and ...; and the first bit group in FIG. 12 comprises a bit block #0, a bit block #1, and ....

As one embodiment, the bit block #0, the bit block #1, and ..., are obtained after the vector #0, the vector #1, and ... are quantized respectively.

As one embodiment, the vector #0, the vector #1, and ... are mapped to the bit block #0, the bit block #1, and ..., respectively through quantization.

As one embodiment, the first bit group is obtained by using each vector in the first vector group through quantization.

As one embodiment, any bit in the first bit group depends on one vector in the first vector group.

As one embodiment, any bit in the first bit group is obtained by using one vector in the first vector group through quantization.

As one embodiment, each vector in the first vector group is mapped to one bit block, and any bit in the first bit group is one bit in the bit block to which one vector in the first vector group is mapped.

As one embodiment, each vector in the first vector group is mapped to one bit block, and the first bit group consists of a bit block to which each vector in the first vector group is mapped.

As one embodiment, each vector in the first vector group is mapped to one bit block through quantization.

As one embodiment, a bit block to which each vector in the first vector group is mapped includes a same number of bits.

As one embodiment, there are two bit blocks to which two vectors in the first vector group are mapped comprise a same number of bits.

As one embodiment, there are two bit blocks to which two vectors in the first vector group are mapped comprise different numbers of bits.

As one embodiment, a number of parameters comprised in the first parameter group is equal to a number of vectors comprised in the first vector group.

As one sub-embodiment of the above-mentioned embodiment, parameters in the first parameter group correspond one-to-one to vectors in the first vector group.

As one embodiment, any bit in the first bit group corresponds to a parameter that is in the first parameter group and that corresponds to a vector on which the bit depends.

As one embodiment, the first parameter is a parameter that is in the first parameter group and that corresponds to a vector on which the target bit depends.

As one embodiment, for any bit in the first bit group, the bit is one bit in a bit block to which one vector in the first vector group is mapped, and the bit corresponds to a parameter that is in the first parameter group and that corresponds to the vector.

As one embodiment, the target bit is one bit in a bit block to which one vector in the first vector group is mapped, and the first parameter is a parameter that is in the first parameter group and that corresponds to the vector.

As one embodiment, the first parameter group indicates an importance of each vector in the first vector group.

As one embodiment, the benefits of the above-mentioned method comprise: optimizing a CSI report, and improving report accuracy.

As one embodiment, the benefits of the above-mentioned method comprise: supporting quantization based on a vector, and improving quantization performance.

## Embodiment 13

Embodiment 13 illustrates a schematic diagram of a first bit group generated after the first compressed CSI is quantized according to one embodiment of the present application, as shown in FIG. 13. In Embodiment 13, the first compressed CSI is input to a first quantizer, and an output of the first quantizer comprises the first bit group.

As one embodiment, the first compressed CSI is an input of the first quantizer.

As one embodiment, an input of the first quantizer comprises the first compressed CSI.

As one embodiment, the output of the first quantizer is the first bit group.

As one embodiment, the first quantizer is obtained through training.

As one embodiment, the first quantizer and the first encoder are obtained through same training.

As one embodiment, training of the first encoder depends on the first quantizer.

As one embodiment, the first quantizer depends on the first encoder.

As one embodiment, the first quantizer depends on training used for generating the first encoder.

As one embodiment, the first compressed CSI comprises the first scalar group, and scalars in the first scalar group are input to the first quantizer in sequence.

As one embodiment, the first compressed CSI comprises the first vector group, and vectors in the first vector group are input to the first quantizer in sequence.

As one embodiment, the first quantizer maps each input scalar or vector to one bit block through quantization, and outputs the bit block.

As one sub-embodiment of the above-mentioned embodiment, a rule of the quantization is fixed.

As one sub-embodiment of the above-mentioned embodiment, a rule of the quantization is obtained through training.

As one sub-embodiment of the above-mentioned embodiment, a rule of the quantization and the first encoder are obtained through same training.

As one sub-embodiment of the above-mentioned embodiment, a rule of the mapping is fixed.

As one sub-embodiment of the above-mentioned embodiment, a rule of the mapping is obtained through training.

As one sub-embodiment of the above-mentioned embodiment, a rule of the mapping and the first encoder are obtained through same training.

As one embodiment, the first bit block comprises one or more bits.

As one embodiment, the first compressed CSI comprises the first scalar group, and the first bit group comprises a bit block to which each scalar in the first scalar group is mapped in the first quantizer.

As one embodiment, the first compressed CSI comprises the first vector group, and the first bit group comprises a bit block to which each vector in the first vector group is mapped in the first quantizer.

As one embodiment, the first quantizer is shared by the first node and the sender of the first RS resource set.

As one embodiment, the first quantizer is known to both the first node and the sender of the first RS resource set.

## Embodiment 14

Embodiment 14 illustrates a schematic diagram of a position of a target bit according to one embodiment of the present application, as shown in FIG. 14. In Embodiment 14, the first bit group comprises a plurality of bit blocks, and each bit block in the first bit group comprises a plurality of bits; the position of the target bit refers to a position of the target bit in a first bit block; and the first bit block is a bit block comprising the first bit in the plurality of bit blocks. In FIG. 14, the plurality of bit blocks are represented as a bit block #0, a bit block #1, and ....

As one embodiment, for any bit in the first bit group, a bit subgroup among the M bit subgroups to which the bit belongs depends on a position of the bit in a bit block to which the bit belongs.

As one embodiment, the plurality of bit blocks are generated after the first compressed CSI is quantized.

As one embodiment, any bit block in the plurality of bit blocks is generated after one scalar or vector in the first compressed CSI is quantized.

As one embodiment, the first compressed CSI comprises the first scalar group, and any bit block in the plurality of bit blocks is obtained after one scalar in the first scalar group is quantized.

As one embodiment, any scalar in the first scalar group is quantized to be mapped to one bit block in the plurality of bit blocks.

As one embodiment, a number of scalars comprised in the first scalar group is equal to a number of the plurality of bit blocks.

As one embodiment, scalars in the first scalar group are in one-to-one correspondence to the plurality of bit blocks; and the plurality of bit blocks are respectively obtained after the scalars in the first scalar group are quantized.

As one embodiment, scalars in the first scalar group are in one-to-one correspondence to the plurality of bit blocks; and scalars in the first scalar group are respectively quantized to be mapped to the plurality of bit blocks.

As one embodiment, a number of quantized bits of each scalar in the first scalar group is equal.

As one embodiment, the M is equal to a number of quantized bits of each scalar in the first scalar group.

As one embodiment, the M is less than a number of quantized bits of each scalar in the first scalar group.

As one embodiment, there are two scalars in the first scalar group that have unequal numbers of quantized bits.

As one embodiment, the M is not greater than a number of quantized bits of any scalar in the first scalar group.

As one embodiment, the first compressed CSI comprises the first vector group, and any bit block in the plurality of bit blocks is obtained after a vector in the first vector group is quantized.

As one embodiment, any vector in the first vector group is quantized to be mapped to one bit block in the plurality of bit blocks.

As one embodiment, a number of vectors comprised in the first vector group is equal to a number of the plurality of bit blocks.

As one embodiment, vectors in the first vector group are in one-to-one correspondence to the plurality of bit blocks; and the plurality of bit blocks are respectively obtained after the vectors in the first vector group are quantized.

As one embodiment, vectors in the first vector group are in one-to-one correspondence to the plurality of bit blocks; and vectors in the first vector group are respectively quantized to be mapped to the plurality of bit blocks.

As one embodiment, a number of quantized bits of each vector in the first vector group is equal.

As one embodiment, the M is equal to a number of quantized bits of each vector in the first vector group.

As one embodiment, the M is less than a number of quantized bits of each vector in the first vector group.

As one embodiment, there are two vectors in the first vector group that have unequal numbers of quantized bits.

As one embodiment, the M is not greater than a number of quantized bits of any vector in the first vector group.

As one embodiment, the number of the plurality of bit blocks refer to a number of bit blocks comprised in the plurality of bit blocks.

As one embodiment, any two bit blocks in the plurality of bit blocks comprise a same number of bits.

As one embodiment, there are two bit blocks in the plurality of bit blocks that comprise a same number of bits.

As one embodiment, there are two bit blocks in the plurality of bit blocks that comprise different numbers of bits.

As one embodiment, a number of bits comprised in each bit block in the plurality of bit blocks is configurable.

As one embodiment, a number of bits comprised in each bit block in the plurality of bit blocks is configured through higher-layer signaling.

As one embodiment, a number of bits comprised in each bit block in the plurality of bit blocks is indicated to the first node by a sender of the first information block.

As one embodiment, a number of bits comprised in each bit block in the plurality of bit blocks does not need to be configured.

As one embodiment, a number of bits comprised in each bit block in the plurality of bit blocks is fixed.

As one embodiment, a number of bits comprised in each bit block in the plurality of bit blocks is determined by the first node itself.

As one embodiment, a number of bits comprised in each bit block in the plurality of bit blocks is equal to a quantization level of the quantization.

As one embodiment, a number of bits comprised in each bit block in the plurality of bit blocks is equal to a quantization level of the first quantizer.

As one embodiment, the first bit group consists of the plurality of bit blocks.

As one embodiment, any bit in the first bit group belongs to one bit block in the plurality of bit blocks.

As one embodiment, any bit in the first bit group belongs to only one bit block in the plurality of bit blocks.

As one embodiment, any bit in the first bit group does not belong to any bit block in the plurality of bit blocks.

As one embodiment, there is no bit in the first bit group that belong to two bit blocks in the plurality of bit blocks at the same time.

As one embodiment, the plurality of bit blocks are arranged in sequence.

As one embodiment, the plurality of bit blocks are arranged in sequence in the first bit group.

As one embodiment, bits in each bit block in the plurality of bit blocks are arranged in sequence.

As one embodiment, bits in each bit block in the plurality of bit blocks are arranged in sequence from left to right.

As one embodiment, bits in each bit block in the plurality of bit blocks are arranged in sequence from an MSB (most significant bit) to an LSB (least significant bit).

As one embodiment, an MSB in each bit block in the plurality of bit blocks is at the leftmost.

As one embodiment, an LSB in each bit block in the plurality of bit blocks is at the rightmost.

As one embodiment, an MSB in each bit block in the plurality of bit blocks is in a lowest order.

As one embodiment, an LSB in each bit block in the plurality of bit blocks is in a highest order.

As one embodiment, an MSB in each bit block in the plurality of bit blocks is at the leftmost in the bit block.

As one embodiment, an LSB in each bit block in the plurality of bit blocks is at the rightmost in the bit block.

As one embodiment, an MSB in each bit block in the plurality of bit blocks is in a lowest order in the bit block.

As one embodiment, an LSB in each bit block in the plurality of bit blocks is in a highest order in the bit block.

As one embodiment, an MSB in each bit block in the plurality of bit blocks has a smallest index in the bit block.

As one embodiment, an LSB in each bit block in the plurality of bit blocks has a largest index in the bit block.

As one embodiment, the position of the target bit in the first bit block refers to: which bit the target bit is in the first bit block.

As one embodiment, the position of the target bit in the first bit block refers to: which bit the target bit is in the first bit block in a sequence from left to right.

As one embodiment, the position of the target bit in the first bit block refers to: which bit the target bit is in the first bit block in a sequence from a lowest order to a highest order.

As one embodiment, the position of the target bit in the first bit block refers to: a position of the target bit in the first bit block in a sequence from left to right.

As one embodiment, the position of the target bit in the first bit block refers to: a position of the target bit in the first bit block in a sequence from a lowest order to a highest order.

As one embodiment, the position of the target bit in the first bit block refers to: an index of the target bit in the first bit block.

As one embodiment, the target bit is a $k^{th}$ bit in the first bit block; a bit subgroup among the M bit subgroups to which the target bit belongs depends on the k; and the k is a positive integer not greater than a number of bits comprised in the first bit block.

As one embodiment, a value range of the k is from 1 to a number of bits comprised in the first bit block.

## Embodiment 15

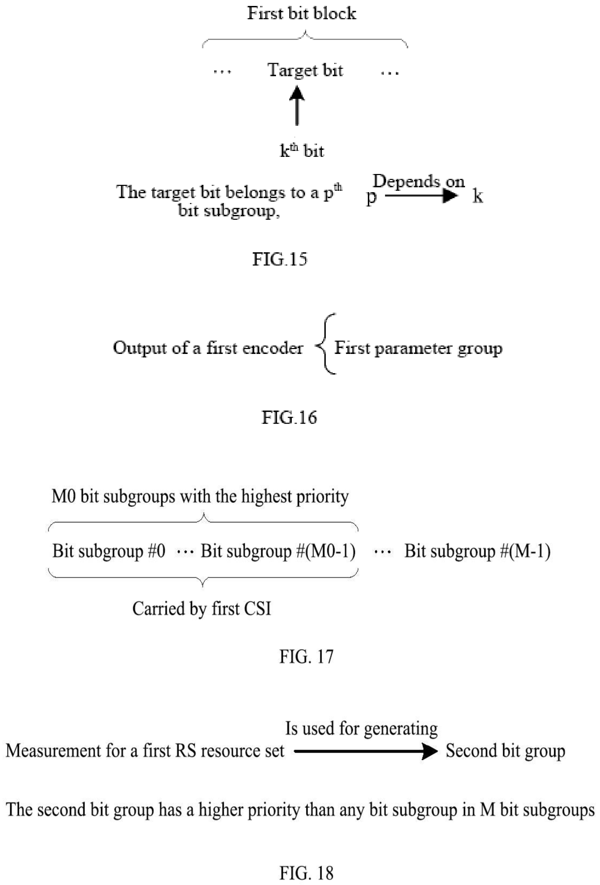

Embodiment 15 illustrates a schematic diagram of a bit subgroup among M bit subgroups to which a target bit belongs depending on a position of the target bit according to one embodiment of the present application, as shown in FIG. 15. In Embodiment 15, bits in each bit block in the plurality of bit blocks are arranged in sequence; and the target bit is a $k^{th}$ bit in the first bit block, the target bit belongs to a $p^{th}$ bit subgroup among the M bit subgroups, and the p depends on the k.

As one embodiment, the p depends on (M-1) thresholds, and the (M-1) thresholds are respectively pairwise distinct positive integers.

As one embodiment, the p depends on the k and the (M-1) thresholds.

As one embodiment, the p depends on a magnitude relationship between the (M-1) thresholds and the k.

As one embodiment, if the k is less than the $1^{st}$ threshold in the (M-1) thresholds, the p is equal to 1.

As one embodiment, if the k is less than or equal to a $1^{st}$ threshold in the (M-1) thresholds, the p is equal to 1.

As one embodiment, if the k is not less than an $i^{th}$ threshold in the (M-1) thresholds and is less than an $(i+1)^{th}$ threshold in the (M-1) thresholds, the p is equal to i+1; and the i is any positive integer less than the M.

As one embodiment, if the k is greater than an $i^{th}$ threshold in the (M-1) thresholds and is not greater than an $(i+1)^{th}$ threshold in the (M-1) thresholds, the p is equal to i+1. the i is any positive integer less than the M.

As one embodiment, if the k is not less than an $i^{th}$ threshold in the (M-1) thresholds and is not greater than an $(i+1)^{th}$ threshold in the (M-1) thresholds, the p is equal to i+1; and the i is any positive integer less than the M.

As one embodiment, if the k is greater than an $i^{th}$ threshold in the (M-1) thresholds and less than an $(i+1)^{th}$ threshold in the (M-1) thresholds, the p is equal to i+1; and the i is any positive integer less than the M.

As one embodiment, if the k is greater than an $(M-1)^{th}$ threshold in the (M-1) thresholds, the p is equal to the M.

As one embodiment, if the k is not less than an $(M-1)^{th}$ threshold in the (M-1) thresholds, the p is equal to the M.

As one embodiment, the (M-1) thresholds are arranged in an ascending order.

As one embodiment, the largest threshold in the (M-1) thresholds is not greater than a number of bits comprised in the first bit block.

As one embodiment, the largest threshold in the (M-1) thresholds is less than a number of bits comprised in the first bit block.

As one embodiment, the (M-1) thresholds are fixed.

As one embodiment, the (M-1) thresholds are configurable.

As one embodiment, the (M-1) thresholds are pre-configured.

As one embodiment, the (M-1) thresholds are configured through a higher-layer parameter.

As one embodiment, the (M-1) thresholds do not need to be configured.

As one embodiment, the (M-1) thresholds are determined by the first node itself.

As one embodiment, the (M-1) thresholds are indicated by a sender of the first RS resource set to the first node.

As one embodiment, a number of bits comprised in each bit block in the plurality of bit blocks is equal to the M. The target bit is a $k^{th}$ bit in the first bit block, and the first bit block belongs to a $k^{th}$ bit subgroup among the M bit subgroups.

As one embodiment, at least one bit block in the plurality of bit blocks comprises two bit sub-blocks, and the two bit sub-blocks are respectively obtained by using an amplitude and a phase of a scalar in the first compressed CSI through quantization.

As one embodiment, each bit block in the plurality of bit blocks comprises two bit sub-blocks, and the two bit sub-blocks in each bit block in the plurality of bit blocks are respectively obtained by using an amplitude and a phase of a scalar in the first compressed CSI through quantization.

As one embodiment, bits in each bit sub-block are arranged in sequence.

As one embodiment, bits in each bit sub-block are arranged in sequence from left to right.

As one embodiment, bits in each bit sub-block are arranged in sequence from an MSB to an LSB.

As one embodiment, the first bit block comprises a first bit sub-block and a second bit sub-block, and a bit subgroup among the M bit subgroups to which the target bit belongs depends on whether the target bit belongs to the first bit sub-block or the second bit sub-block.

As one embodiment, the first bit block comprises a first bit sub-block and a second bit sub-block, the target bit belongs to the first bit sub-block, and the position of the target bit refers to a position of the target bit in the first bit sub-block.

As one embodiment, the first bit block comprises a first bit sub-block and a second bit sub-block, a bit subgroup among the M bit subgroups to which the target bit belongs depends on whether the target bit belongs to the first bit sub-block or the second bit sub-block and a position of the target bit in the bit sub-block to which the target bit belongs.

As one embodiment, the first bit block comprises a first bit sub-block and a second bit sub-block, the target bit belongs to the first bit sub-block, the target bit is a $k1^{th}$ bit in the first bit sub-block, the target bit belongs to a $p^{th}$ bit subgroup among the M bit subgroups, and the p depends on the k1.

## Embodiment 16

Embodiment 16 illustrates a schematic diagram of an output of a first encoder comprising a first parameter group according to one embodiment of the present application, as shown in FIG. 16.

As one embodiment, the output of the first encoder comprises the first compressed CSI and the first parameter group.

As one embodiment, the essence of the above-mentioned method comprises: the first encoder generates the first parameter group while generating compressed CSI to indicate importances of different elements (scalars or vectors) in the compressed CSI.

As one embodiment, the benefits of the above-mentioned method comprise: ensuring that a most important part has a highest priority, thereby improving accuracy of a CSI report, and optimizing system performance.

As one embodiment, the first parameter group is not reported.

As one embodiment, the first CSI does not carry the first parameter group.

As one embodiment, the first CSI does not comprise the first parameter group.

As one embodiment, the first parameter group does not belong to CSI.

## Embodiment 17

Embodiment 17 illustrates a schematic diagram of first CSI only carrying M0 bit subgroups with the highest priority in M bit subgroups according to one embodiment of the present application, as shown in FIG. 17.

As one embodiment, a first reference value depends on a total number of bits comprised in the M0 bit subgroups, and the first reference value is not greater than a first threshold; a second reference value depends on a total number of bits comprised in (M0+1) bit subgroups, the second reference value is greater than the first threshold, and the (M0+1) bit subgroups are (M0+1) bit subgroups with the highest priority among the M bit subgroups; and the first threshold is a positive integer.

As one embodiment, the first reference value and the second reference value are respectively a positive integer.

As one embodiment, the first reference value depends on a number of subcarriers and OFDM (Orthogonal Frequency Division Multiplex) symbols that are allocated to a PUSCH carrying the first CSI.

As one embodiment, the first reference value depends on a size of each CB (Code Block) carried by a UL-SCH (Uplink Shared Channel) corresponding to a PUSCH carrying the first CSI.

As one embodiment, the first reference value depends on the total number of bits comprised in the M0 bit subgroups, a number of subcarriers and OFDM symbols that are allocated to a PUSCH carrying the first CSI, and a size of each CB carried by a UL-SCH corresponding to the PUSCH carrying the first CSI.

As one embodiment, the first reference value is equal to a sum of the total number of bits comprised in the M0 bit subgroups and a first integer multiplied by a first offset, then multiplied by a third numerical value and rounded down; the first integer is a number of CRC (Cyclic redundancy check) bits, and the first integer is a non-negative integer; and the first offset is one positive real number, and the third numerical value depends on a number of subcarriers and OFDM symbols that are allocated to a PUSCH carrying the first CSI, and the size of each CB carried by the UL-SCH corresponding to the PUSCH carrying the first CSI.

As one embodiment, the first reference value is

$$
\text{equal to } \left\lceil \frac{(O_1 + L_1) \cdot \beta_{offset}^{PUSCH} \cdot \sum_{l=0}^{N_{symb,all}^{PUSCH}-1} M_{SC}^{UCI}(l)}{\sum_{r=0}^{C_{UL-SCH}-1} K_r} \right\rceil,
$$

wherein the $O_1$ is the total number of bits comprised in the M0 bit subgroups, the $L_1$ is the first integer, the

$$\beta_{offset}^{PUSCH}$$ is the first offset, and the

$$\frac{\sum_{l=0}^{N_{symb,all}^{PUSCH}-1} M_{SC}^{UCI}(l)}{\sum_{r=0}^{C_{UL-SCH}-1} K_r}$$ is the third numerical value.

As one embodiment, $N_{symb,all}^{PUSCH}$ is a number of OFDM symbols allocated to a PUSCH carrying the first CSI or a number of OFDM symbols comprised in a nominal repetition of a PUSCH carrying the first CSI, the

$$M_{SC}^{UCI}(l)$$ is a number of REs (Resource Elements) in an OFDM symbol $l$ that can be used for transmitting UCI (Uplink Control Information), the $C_{UL-SCH}$ is a number of CBs carried by a UL-SCH corresponding to the PUSCH carrying the first CSI, and $K_r$ is a size of a CB r carried by the UL-SCH corresponding to the PUSCH carrying the first CSI.

As one embodiment, when the OFDM symbol $l$ carries DMRS (DeModulation Reference Signals) of the PUSCH carrying the first CSI, the $M_{SC}^{UCI}(l)$ is equal to 0; or when the OFDM symbol $l$ does not carry the DMRS of the PUSCH carrying the first CSI, the $M_{SC}^{UCI}(l)$ is

equal to $M_{SC}^{PUSCH} - M_{SC}^{PT-RS}(l)$, wherein the

$$M_{SC}^{PUSCH}$$ is a number of subcarriers allocated to the PUSCH carrying the first CSI, and the $M_{SC}^{PT-RS}(l)$ is a number of subcarriers that are in the OFDM symbol $l$ and that carry a PTRS (Phase-tracking Reference Signal) of the PUSCH carrying the first CSI.

As one embodiment, when the total number of bits comprised in the M0 bit subgroups is greater than or equal to 360, the first integer is equal to 11.

As one embodiment, when the total number of bits comprised in the M0 bit subgroups is less than 12, the first integer is equal to 0.

As one embodiment, when the total number of bits comprised in the M0 bit subgroups is greater than or equal to 12 and less than or equal to 19, the first integer is equal to 6.

As one embodiment, when the total number of bits comprised in the M0 bit subgroups is greater than or equal to 20, the first integer is equal to 11.

As one embodiment, the first offset is configured through a higher-layer parameter.

As one embodiment, the first offset is configured through a higher-layer parameter BetaOffsets.

As one embodiment, the first offset is indicated by DCI (Downlink Control Information).

As one embodiment, the second reference value depends on a number of subcarriers and OFDM symbols that are allocated to a PUSCH carrying the first CSI.

As one embodiment, the second reference value depends on a size of each CB carried by a UL-SCH corresponding to a PUSCH carrying the first CSI.

As one embodiment, the second reference value depends on the total number of bits comprised in the (M0+1) bit subgroups, a number of subcarriers and OFDM symbols that are allocated to a PUSCH carrying the first CSI, and a size of each CB carried by a UL-SCH corresponding to the PUSCH carrying the first CSI.

As one embodiment, the second reference value is equal to a sum of the total number of bits comprised in the (M0+1) bit subgroups and a second integer multiplied by a first offset, then multiplied by a third numerical value, and rounded down; The second integer is a number of CRC bits, and the second integer is a non-negative integer; and the first offset is one positive real number, and the third numerical value depends on a number of subcarriers and OFDM symbols that are allocated to a PUSCH carrying the first CSI, and the size of each CB carried by the UL-SCH corresponding to the PUSCH carrying the first CSI.

As one embodiment, the second reference value is equal to

$$\left\lceil \frac{(O_2+L_2)\cdot\beta_{offset}^{PUSCH}\cdot\sum_{l=0}^{N_{symb,all}^{PUSCH}-1} M_{SC}^{UCI}(l)}{\sum_{r=0}^{C_{UL-SCH}-1} K_r} \right\rceil, \text{ wherein}$$

the $O_2$ is the total number of bits ed in the (M0+1) bit subgroups, the $L_2$ is the second integer, the $\beta_{offset}^{PUSCH}$ is the first offset, and the $\frac{\sum_{l=0}^{N_{symb,all}^{PUSCH}-1} M_{SC}^{UCI}(l)}{\sum_{r=0}^{C_{UL-SCH}-1} K_r}$ is the third numerical value.

As one embodiment, when the total number of bits comprised in the (M0+1) bit subgroups is greater than or equal to 360, the second integer is equal to 11.

As one embodiment, when the total number of bits comprised in the (M0+1) bit subgroups is less than 12, the second integer is equal to 0.

As one embodiment, when the total number of bits comprised in the (M0+1) bit subgroups is greater than or equal to 12 and less than or equal to 19, the second integer is equal to 6.

As one embodiment, when the total number of bits comprised in the (M0+1) bit subgroups is greater than or equal to 20, the second integer is equal to 11.

As one embodiment, the first threshold is a positive integer greater than 1.

As one embodiment, the first threshold is determined by the first node itself.

As one embodiment, the first threshold depends on a number of subcarriers and OFDM symbols that are allocated to a PUSCH carrying the first CSI.

As one embodiment, the first threshold depends on a number of bits comprised in first-type UCI.

As one embodiment, the first threshold depends on a number of coded modulation symbols per layer used for transmitting the first-type UCI.

As one embodiment, the first-type UCI is transmitted in a PUSCH carrying the first CSI.

As one embodiment, the first-type UCI comprises a HARQ-ACK (Hybrid Automatic Repeat Request Acknowledgement).

As one embodiment, the first-type UCI comprises CG (Configured Grant)-UCI.

As one embodiment, the first-type UCI comprises first-type CSI, and the first-type CSI comprises one or more of an RI (Rank Indicator), a CRI (CSI-RS Resource Indicator), or a CQI (Channel Quality Indicator).

As one embodiment, the first bit group does not belong to the first-type CSI.

As one embodiment, the M bit subgroups do not belong to the first-type CSI.

As one embodiment, the first threshold is linearly related to a number of coded modulation symbols per layer used for transmitting the first-type UCI, and a linearity coefficient between the first threshold and the number of coded modulation symbols per layer used for transmitting the first-type UCI is equal to -1.

As one embodiment, the first threshold is equal to $\left\lceil \alpha \cdot \sum_{l=0}^{N_{symb,all}^{PUSCH}-1} M_{SC}^{UCI}(l) \right\rceil - Q'$, wherein the $\alpha$ is one non-negative positive real number not greater than 1, and the $Q'$ is a number of coded modulation symbols per layer used for transmitting the first-type UCI.

As one embodiment, the $Q'$ depends on a number of bits comprised in the first-type UCI.

As one embodiment, the $\alpha$ is configured through a higher-layer parameter.

As one embodiment, the $\alpha$ is configured through a higher-layer parameter scaling.

As one embodiment, the first threshold is equal to a minimum value in a second threshold and a third threshold; and both the second threshold and the third threshold depend on a number of subcarriers and OFDM symbols that are allocated to a PUSCH carrying the first CSI, and a number of coded modulation symbols per layer used for transmitting first-type UCI.

As one embodiment, the second threshold is equal to $\left\lceil \alpha \cdot \sum_{l=0}^{N_{symb,all}^{PUSCH}-1} M_{SC}^{UCI}(l) \right\rceil - Q'$, wherein the $\alpha$ is one non-negative positive real number not greater than 1, and the Q' is a number of coded modulation symbols per layer used for transmitting first-type UCI.

As one embodiment, the third threshold is equal to $\sum_{l=0}^{N_{symb,actual}^{PUSCH}-1} M_{SC,actual}^{UCI}(l) - Q'$, wherein $N_{symb,actual}^{PUSCH}$ is a number of OFDM symbols comprised in actual repetition of a PUSCH carrying the first CSI, the $M_{SC,actual}^{UCI}(l)$ is a number of REs available for transmitting UCI in an OFDM symbol *l*, and *Q'* is a number of coded modulation symbols per layer used for transmitting the first-type UCI.

As one embodiment, when the OFDM symbol *l* carries a DMRS of actual transmission of a PUSCH carrying the first CSI, the $M_{SC,actual}^{UCI}(l)$ is equal to 0; or when the OFDM symbol *l* does not carry the DMRS of the actual transmission of the PUSCH carrying the first CSI, the $M_{SC,actual}^{UCI}(l)$ is equal to $M_{SC}^{PUSCH} - M_{SC,actual}^{PT-RS}(l)$, wherein the $M_{SC}^{PUSCH}$ is a number of subcarriers allocated to the PUSCH carrying the first CSI, and the $M_{SC,actual}^{PT-RS}(l)$ is a number of subcarriers in the OFDM symbol *l* that carry a PTRS of the PUSCH carrying the first CSI.

### Embodiment 18

Embodiment 18 illustrates a schematic diagram of a second given bit subgroup according to one embodiment of the present application, as shown in FIG. 18. In Embodiment 18, the first CSI carries a second bit group, and a measurement for the first RS resource set is used by the first node for generating the second bit group; and the second bit group has a higher priority than the M bit subgroups.

As one embodiment, the second bit group has a higher priority than any bit subgroup among the M bit subgroups.

As one embodiment, the first CSI carries the M0 bit subgroups and the second bit group.

As one embodiment, the first CSI carries the M bit subgroups and the second bit group.

As one embodiment, the second bit group comprises a plurality of bits.

As one embodiment, the first RS resource set is used for obtaining a channel measurement used for generating the second bit group.

As one embodiment, the first RS resource set is used for obtaining an interference measurement used for generating the second bit group.

As one embodiment, the first node obtains, based on the first RS resource set, a channel measurement used for generating the second bit group.

As one embodiment, the first node obtains, based on an RS that is transmitted in the first RS resource set and that is not later than a CSI reference resource of the first CSI, a channel measurement used for generating the second bit group.

As one embodiment, the first node obtains, based only on the first RS resource set, a channel measurement used for generating the second bit group.

As one embodiment, the first node obtains, based only on an RS that is transmitted in the first RS resource set and that is not later than a CSI reference resource of the first CSI, a channel measurement used for generating the second bit group.

As one embodiment, the second bit group carries CSI.

As one embodiment, the second bit group carries one or more of an RI, a CRI, or a CQI.

As one embodiment, the second bit group carries wideband CSI.

As one embodiment, the second bit group belongs to the first-type CSI.

As one embodiment, the first threshold depends on a number of bits comprised in the second bit group.

As one embodiment, the first threshold depends on a number of coded modulation symbols per layer used for transmitting the second bit group.

As one embodiment, the *Q'* comprises a number of coded modulation symbols per layer used for transmitting the second bit group.

As one embodiment, the *Q'* depends on a number of bits comprised in the second bit group.

As one embodiment, the output of the first encoder does not comprise the second bit group.

As one embodiment, the second bit group does not depend on the output of the first encoder.

As one embodiment, a channel parameter recovered by the sender of the first RS resource set based on the second bit group is known to the first node.

As one embodiment, a channel parameter recovered by the first node based on the second bit group is known to the sender of the first RS resource set.

As one embodiment, a generator used for generating the second bit group is obtained through training.

As one embodiment, the second bit group comprises the CSI defined in 3GPP Rel-17.

As one embodiment, the second bit group is used for determining a number of bits comprised in the first bit group.

As one embodiment, the benefits of the above-mentioned method comprise: ensuring that a sender and a recipient of the first CSI have a consistent understanding on a payload size of the CSI.

As one embodiment, the benefits of the above-mentioned method comprise: ensuring transmission reliability of a CSI report.

As one embodiment, the second bit group is used for determining a length of the first compressed CSI.

As one embodiment, the second bit group indicates a length of the first compressed CSI.

As one embodiment, the second bit group comprises length information of the first compressed CSI.

As one embodiment, the second bit group is used for determining a ratio between a length of the first compressed CSI and a length of the first before-compression CSI.

As one embodiment, the second bit group indicates a ratio between a length of the first compressed CSI and a length of the first before-compression CSI.

As one embodiment, the second bit group comprises information of a ratio between a length of the first compressed CSI and a length of the first before-compression CSI.

As one embodiment, a length of the first compressed CSI refers to: a number of scalars comprised in the first compressed CSI.

As one embodiment, a length of the first compressed CSI refers to: a number of vectors comprised in the first compressed CSI.

As one embodiment, a length of the first before-compression CSI refers to: a number of scalars comprised in the first before-compression CSI.

As one embodiment, a length of first before-compression CSI refers to: a number of vectors comprised in the first before-compression CSI.

As one embodiment, the second bit group is used for determining a length of the output of the first encoder.

As one embodiment, the second bit group indicates a length of the output of the first encoder.

As one embodiment, the second bit group comprises length information of the output of the first encoder.

As one embodiment, the second bit group is used for determining a ratio between a length of the output of the first encoder and a length of the input of the first encoder.

As one embodiment, the second bit group indicates a ratio between a length of the output of the first encoder and a length of the input of the first encoder.

As one embodiment, the second bit group comprises information of a ratio between a length of the output of the first encoder and a length of the input of the first encoder.

As one embodiment, a length of the output of the first encoder refers to: a number of scalars comprised in one output of the first encoder.

As one embodiment, a length of the output of the first encoder refers to: a number of vectors comprised in one output of the first encoder.

As one embodiment, a length of the input of the first encoder refers to: a number of scalars comprised in one input of the first encoder.

As one embodiment, a length of the input of the first encoder refers to a number of vectors comprised in one input of the first encode.

As one embodiment, the second bit group is used for determining a compression ratio of the first encoder.

As one embodiment, the second bit group indicates a compression ratio of the first encoder.

As one embodiment, the second bit group comprises information of a compression ratio of the first encoder.

As one embodiment, the second bit group is used for determining a number of bits comprised in each bit block in the plurality of bit blocks.

As one embodiment, the second bit group indicates a number of bits comprised in each bit block in the plurality of bit blocks.

As one embodiment, the second bit group comprises information of a number of bits comprised in each bit block in the plurality of bit blocks.

As one embodiment, the second bit group is used for determining quantization precision of the first quantizer.

As one embodiment, the second bit group indicates quantization precision of the first quantizer.

As one embodiment, the second bit group comprises information of quantization precision of the first quantizer.

As one embodiment, the second bit group is used for determining a number of bits that are mapped to each scalar or vector in the first compressed CSI through quantization.

As one embodiment, the second bit group indicates a number of bits that are mapped to each scalar or vector in the first compressed CSI through quantization.

As one embodiment, the second bit group comprises information of a number of bits that are mapped to each scalar or vector in the first compressed CSI through quantization.

As one embodiment, the second bit group and any bit subgroup among the M0 bit subgroups are encoded respectively.

As one embodiment, the second bit group and any bit subgroup among the M bit subgroups carried by the first CSI are encoded respectively.

## Embodiment 19

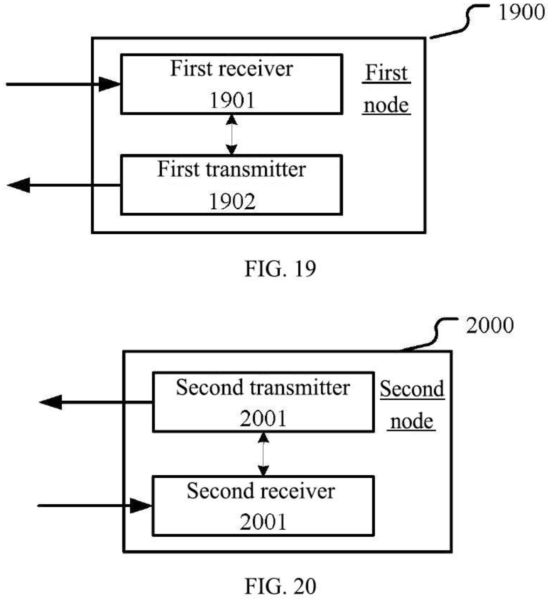

Embodiment 19 illustrates a structural block diagram of a processing device used in a first node according to one embodiment of the present application, as shown in FIG. 19. In FIG. 19, the processing device 1900 in the first node comprises a first receiver 1901 and a first transmitter 1902.

In Embodiment 19, the first receiver 1901 receives a first information block; and the first transmitter 1902 sends first CSI.

In Embodiment 19, the first information block is used for determining a first RS resource set, and the first RS resource set comprises one or more RS resources; a measurement for the first RS resource set is used for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

As one embodiment, the first bit group depends on the first compressed CSI; and the first compressed CSI satisfies at least one of the following:

a channel parameter recovered by a sender of the first RS resource set based on the first compressed CSI is unknown to the first node;

a channel parameter recovered by the first node based on the first compressed CSI is unknown to the sender of the first RS resource set;

a generator used for generating the first compressed CSI is obtained based on training; and

the first compressed CSI does not belong to the CSI defined in 3GPP Rel-17, nor does it belong to the CSI defined in versions prior to 3GPP Rel-17.

As one embodiment, the first bit group is generated after the first compressed CSI is quantized.

As one embodiment, the first bit group comprises a plurality of bit blocks, and each bit block in the first bit group comprises a plurality of bits; the position of the target bit refers to a position of the target bit in a first bit block; and the first bit block is a bit block among the plurality of bit blocks that comprises the target bit.

As one embodiment, the measurement for the first RS resource set is used for generating an input of a first encoder, and an output of the first encoder is used for generating the first CSI; and the output of the first encoder comprises the first parameter group.

As one embodiment, the first CSI only carries M0 bit subgroups with the highest priority among the M bit subgroups, and the M0 is less than the M; a first reference value depends on a total number of bits comprised in the M0 bit subgroups, and the first reference value is not greater than a first threshold; a second reference value depends on a total number of bits comprised in (M0+1) bit subgroups, the second reference value is greater than the first threshold, and the (M0+1) bit subgroups are (M0+1) bit subgroups with the highest priority in the M bit subgroups; and the first threshold is a positive integer.

As one embodiment, the first CSI carries a second bit group, and the measurement for the first RS resource set is used for generating the second bit group; and the second bit group has a higher priority than the M bit subgroups.

As one embodiment, the first receiver 1901 receives an RS in the first RS resource set.

As one embodiment, the first node device is user equipment.

As one embodiment, the first node device is a relay node device.

As one embodiment, the first bit is any bit in the first bit group; the M bit subgroups are arranged in sequence from a high priority to a low priority; the first bit belongs to a $p^{th}$ bit subgroup among the M bit subgroups, and the p is a positive integer not greater than the M; and the p depends on the first parameter, or the p depends on n, all bits in the first bit group are arranged in sequence, and the first bit is an $n^{th}$ bit in the first bit group.

As one embodiment, the first bit is any bit in the first bit group; all bits in the first bit group are arranged in sequence; and the position of the first bit refers to a position of the first bit in the first bit group.

As one embodiment, the first receiver 1901 comprises at least one of {the antenna 452, the receiving device 454, the receiving processor 456, the multi-antenna receiving processor 458, the controller/processor 459, the memory 460, and the data source 467} in Embodiment 4.

As one embodiment, the first transmitter 1902 comprises at least one of {the antenna 452, the transmitting device 454, the transmitting processor 468, the multi-antenna transmitting processor 457, the controller/processor 459, the memory 460, and the data source 467} in Embodiment 4.

**Embodiment 20**

Embodiment 20 illustrates a structural block diagram of a processing device used in a second node according to one embodiment of the present application, as shown in FIG. 20. In FIG. 20, a processing device 2000 in the second node comprises a second transmitter 2001 and a second receiver 2002.

In Embodiment 20, the second transmitter 2001 sends a first information block; and the second receiver 2002 receives first CSI.

In Embodiment 20, the first information block is used for determining a first RS resource set, and the first RS resource set comprises one or more RS resources; a measurement for the first RS resource set is used for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

As one embodiment, the first bit group depends on the first compressed CSI; and the first compressed CSI satisfies at least one of the following:

a channel parameter recovered by the second node based on the first compressed CSI is unknown to a sender of the first CSI;
a channel parameter recovered by the sender of the first CSI based on the first compressed CSI is unknown to the second node;
a generator used for generating the first compressed CSI is obtained based on training; and
the first compressed CSI does not belong to the CSI defined in 3GPP Rel-17, nor does it belong to the CSI defined in versions prior to 3GPP Rel-17.

As one embodiment, the first bit group is generated after the first compressed CSI is quantized.

As one embodiment, the first bit group comprises a plurality of bit blocks, and each bit block in the first bit group comprises a plurality of bits; the position of the target bit refers to a position of the target bit in a first bit block; and the first bit block is a bit block among the plurality of bit blocks that comprises the target bit.

As one embodiment, the measurement for the first RS resource set is used for generating an input of a first encoder, and an output of the first encoder is used for generating the first CSI; and the output of the first encoder comprises the first parameter group.

As one embodiment, the first CSI only carries $M0$ bit subgroups with the highest priority among the M bit subgroups, and the $M0$ is less than the M; a first reference value depends on a total number of bits comprised in the $M0$ bit subgroups, and the first reference value is not greater than a first threshold; a second reference value depends on a total number of bits comprised in $(M0+1)$ bit subgroups, the second reference value is greater than the first threshold, and the $(M0+1)$ bit subgroups are $(M0+1)$ bit subgroups with the highest priority in the M bit subgroups; and the first threshold is a positive integer.

As one embodiment, the first CSI carries a second bit group, and the measurement for the first RS resource set is used for generating the second bit group; and the second bit group has a higher priority than the M bit subgroups.

As one embodiment, the second transmitter 2001 sends an RS in the first RS resource set.

As one embodiment, the second node is a base station.

As one embodiment, the second node is user equipment.

As one embodiment, the second node is a relay node.

As one embodiment, the first CSI reference resource depends on the first RS resource.

As one embodiment, the first bit is any bit in the first bit group; the M bit subgroups are arranged in sequence from a high priority to a low priority; the first bit belongs to a $p^{th}$ bit subgroup among the M bit subgroups, and the p is a positive integer not greater than the M; and the p depends on the first parameter, or the p depends on n, all bits in the first bit group are arranged in sequence, and the first bit is an $n^{th}$ bit in the first bit group.

As one embodiment, the first bit is any bit in the first bit group; all bits in the first bit group are arranged in sequence; and the position of the first bit refers to a position of the first bit in the first bit group.

As one embodiment, the second transmitter 2001 comprises at least one of {the antenna 420, the transmitting device 418, the transmitting processor 416, the multi-antenna transmitting processor 471, the controller/processor 475, and the memory 476} in Embodiment 4.

As one embodiment, the second receiver 2002 comprises at least one of {the antenna 420, the receiving device 418, the receiving processor 470, the multi-antenna transmitting processor 471, the controller/processor 475, and the memory 476} in Embodiment 4.

Those skilled in the art can understand that all or parts of the steps in the above-mentioned method can be completed by instructing the relevant hardware by a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combination. The user equipment, the terminal, and the UE in the present application comprise but are not limited to a drone, a communication module on the drone, a remote-controlled airplane, an aircraft, a small airplane, a mobile phone, a tablet computer, a notebook, a vehicle-mounted communication device, a transportation vehicle, a vehicle, an RSU, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer, and another wireless communication device. The base station or the system device in the present application includes but is not limited to a macro cell base station, a micro cell base station, a small cell base stations, a femtocell, a relay base station, an eNB, a gNB, a TRP (Transmitter Receiver Point), a GNSS, a relay satellite, a satellite base station, an aerial base station, an RSU (Road Side Unit), a drone, a test device, for example, a wireless communication device such as a transceiver or signaling testers that simulate some functions of the base station.

Those skilled in the art should understand that the present invention can be implemented in other specified forms without departing from the core or basic features thereof. Therefore, the embodiments currently disclosed should be regarded to be descriptive rather than restrictive in any way. The scope of the invention is determined by the appended claims rather than the previous description, and all changes within their equivalent meanings and areas are deemed to be included therein.

**Claims**

1. A first node used in wireless communication, comprising:

   a first receiver receiving a first information block, wherein the first information block is used for determining a first RS resource set, and the first RS resource set comprises one or more RS resources; and
   a first transmitter sending first CSI,
   wherein a measurement for the first RS resource set is used for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

2. The first node according to claim 1, wherein the first bit group depends on first compressed CSI; and the first compressed CSI satisfies at least one of the following:

   a channel parameter recovered by a sender of the first RS resource set based on the first compressed CSI is unknown to the first node;
   a channel parameter recovered by the first node based on the first compressed CSI is unknown to the sender of the first RS resource set;
   a generator used for generating the first compressed CSI is obtained based on training; and

   the first compressed CSI does not belong to the CSI defined in 3GPP Rel-17, nor does it belong to the CSI defined in versions prior to 3GPP Rel-17.

3. The first node according to claim 2, wherein the first bit group is generated after the first compressed CSI is quantized.

4. The first node according to any one of claims 1 to 3, wherein the first bit group comprises a plurality of bit blocks, and each bit block in the first bit group comprises a plurality of bits; the position of the target bit refers to a position of the target bit in a first bit block; and the first bit block is a bit block among the plurality of bit blocks that comprises the target bit.

5. The first node according to any one of claims 1 to 4, wherein the measurement for the first RS resource set is used for generating an input to a first encoder, and an output of the first encoder is used for generating the first CSI; and the output of the first encoder comprises the first parameter group.

6. The first node according to any one of claims 1 to 5, wherein the first CSI only carries M0 bit subgroups with the highest priority among the M bit subgroups, and M0 is less than M; a first reference value depends on a total number of bits comprised in the M0 bit subgroups, and the first reference value is not greater than a first threshold; a second reference value depends on a total number of bits comprised in (M0+1) bit subgroups, the second reference value is greater than the first threshold, and the (M0+1) bit subgroups are (M0+1) bit subgroups with the highest priority among the M bit subgroups; and the first threshold is a positive integer.

7. The first node according to any one of claims 1 to 6, wherein the first CSI carries a second bit group, and the measurement for the first RS resource set is used for generating the second bit group; and the second bit group has a higher priority than the M bit subgroups.

8. A second node used in wireless communication, comprising:

   a second transmitter sending a first information block, wherein the first information block is used for determining a first RS resource set, and the first RS resource set comprises one or more RS resources; and
   a second receiver receiving first CSI,
   wherein a measurement for the first RS resource set is used for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

9. The second node according to claim 8, wherein the first bit group depends on first compressed CSI; and the first compressed CSI satisfies at least one of the following:

a channel parameter recovered by the second node based on the first compressed CSI is unknown to a sender of the first CSI;
a channel parameter recovered by the sender of the first CSI based on the first compressed CSI is unknown to the second node;
a generator used for generating the first compressed CSI is obtained based on training; and
the first compressed CSI does not belong to the CSI defined in 3GPP Rel-17, nor does it belong to the CSI defined in versions prior to 3GPP Rel-17.

10. The second node according to claim 9, wherein the first bit group is generated after the first compressed CSI is quantized.

11. The second node according to any one of claims 8 to 10, wherein the first bit group comprises a plurality of bit blocks, and each bit block in the first bit group comprises a plurality of bits; the position of the target bit refers to a position of the target bit in a first bit block; and the first bit block is a bit block among the plurality of bit blocks that comprises the target bit.

12. The second node according to any one of claims 8 to 11, wherein the measurement for the first RS resource set is used for generating an input to a first encoder, and an output of the first encoder is used for generating the first CSI; and the output of the first encoder comprises the first parameter group.

13. The second node according to any one of claims 8 to 12, wherein the first CSI only carries M0 bit subgroups with the highest priority among the M bit subgroups, and M0 is less than M; a first reference value depends on a total number of bits comprised in the M0 bit subgroups, and the first reference value is not greater than a first threshold; a second reference value depends on a total number of bits comprised in (M0+1) bit subgroups, the second reference value is greater than the first threshold, and the (M0+1) bit subgroups are (M0+1) bit subgroups with the highest priority among the M bit subgroups; and the first threshold is a positive integer.

14. The method according to any one of claims 8 to 13, wherein the first CSI carries a second bit group, and the measurement for the first RS resource set is used for generating the second bit group; and the second bit group has a higher priority than the M bit subgroups.

15. A method used for a first node in wireless communication, comprising:

receiving a first information block, wherein the first information block is used for determining a first RS resource set, and the first RS resource set comprises one or more RS resources; and
sending first CSI,
wherein a measurement for the first RS resource set is used for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

16. The method according to claim 15, wherein the first bit group depends on first compressed CSI; and the first compressed CSI satisfies at least one of the following:

a channel parameter recovered by a sender of the first RS resource set based on the first compressed CSI is unknown to the first node;
a channel parameter recovered by the first node based on the first compressed CSI is unknown to the sender of the first RS resource set;
a generator used for generating the first compressed CSI is obtained based on training; and
the first compressed CSI does not belong to the CSI defined in 3GPP Rel-17, nor does it belong to the CSI defined in versions prior to 3GPP Rel-17.

17. The method according to claim 16, wherein the first bit group is generated after the first compressed CSI is quantized.

18. The method according to any one of claims 15 to 17, wherein the first bit group comprises a plurality of bit blocks, and each bit block in the first bit group comprises a plurality of bits; the position of the target bit refers to a position of the target bit in a first bit block; and the first bit block is a bit block among the plurality of bit blocks that comprises the target bit.

19. The method according to any one of claims 15 to 18, wherein the measurement for the first RS resource set is used for generating an input to a first encoder, and an output of the first encoder is used for generating the first CSI; and the output of the first encoder comprises the first parameter group.

20. The method according to any one of claims 15 to 19, wherein the first CSI only carries M0 bit subgroups with the highest priority among the M bit subgroups, and M0 is less than M; a first reference value depends on a total number of bits comprised in the M0 bit subgroups, and the first reference value is not greater than a first threshold; a second reference value depends on a total number of bits comprised in (M0+1) bit subgroups, the second reference value is greater than the first threshold, and the (M0+1) bit subgroups are (M0+1) bit subgroups with the highest priority among the M bit subgroups; and the first threshold is a positive integer.

21. The method according to any one of claims 15 to 20, wherein the first CSI carries a second bit group, and the measurement for the first RS resource set is used for generating the second bit group; and the second bit group has a higher priority than the M bit subgroups.

22. A method used for a second node in wireless communication, comprising:

sending a first information block, wherein the first information block is used for determining a first RS resource set, and the first RS resource set comprises one or more RS resources; and receiving first CSI, wherein a measurement for the first RS resource set is used for generating a first bit group; the first CSI carries at least part of bits in the first bit group; the first bit group comprises M bit subgroups, each of the M bit subgroups comprises a plurality of bits in the first bit group, and M is a positive integer greater than 1; any two of the M bit subgroups have different priorities; a target bit is one bit in the first bit group, and a bit subgroup among the M bit subgroups to which the target bit belongs depends on a position of the target bit or a first parameter; and each bit in the first bit group corresponds to one parameter in a first parameter group, and the first parameter is a parameter corresponding to the target bit in the first parameter group.

23. The method according to claim 22, wherein the first bit group depends on first compressed CSI; and the first compressed CSI satisfies at least one of the following:

a channel parameter recovered by the second node based on the first compressed CSI is unknown to a sender of the first CSI; a channel parameter recovered by the sender of the first CSI based on the first compressed CSI is unknown to the second node; a generator used for generating the first compressed CSI is obtained based on training; and the first compressed CSI does not belong to the CSI defined in 3GPP Rel-17, nor does it belong to the CSI defined in versions prior to 3GPP Rel-17.

24. The method according to claim 23, wherein the first bit group is generated after the first compressed CSI is quantized.

25. The method according to any one of claims 22 to 24, wherein the first bit group comprises a plurality of bit blocks, and each bit block in the first bit group comprises a plurality of bits; the position of the target bit refers to a position of the target bit in a first bit block; and the first bit block is a bit block among the plurality of bit blocks that comprises the target bit.

26. The method according to any one of claims 22 to 25, wherein the measurement for the first RS resource set is used for generating an input to a first encoder, and an output of the first encoder is used for generating the first CSI; and the output of the first encoder comprises the first parameter group.

27. The method according to any one of claims 22 to 26, wherein the first CSI only carries M0 bit subgroups with the highest priority among the M bit subgroups, and M0 is less than M; a first reference value depends on a total number of bits comprised in the M0 bit subgroups, and the first reference value is not greater than a first threshold; a second reference value depends on a total number of bits comprised in (M0+1) bit subgroups, the second reference value is greater than the first threshold, and the (M0+1) bit subgroups are (M0+1) bit subgroups with the highest priority among the M bit subgroups; and the first threshold is a positive integer.

28. The method according to any one of claims 22 to 27, wherein the first CSI carries a second bit group, and the measurement for the first RS resource set is used for generating the second bit group; and the second bit group has a higher priority than the M bit sub-groups.

100

First node    AA

101

Receive a first information block    BB

102

Send first CSI    CC

FIG. 1

AA    First node
BB    Receive a first information block
CC    Send first CSI

FIG. 1

FIG. 2

Control plane
300

L3

RRC ⌐ 306

305 ⌐

L2

PDCP ⌐ 304

RLC ⌐ 303

MAC ⌐ 302

L1

PHY ⌐ 301

User plane
350

SDAP ⌐ 356

355 ⌐

L2

PDCP ⌐ 354

RLC ⌐ 353

MAC ⌐ 352

L1

PHY ⌐ 351

FIG. 3

410

416          471

Transmitting processor → Multi-antenna transmitting processor

475

Memory ↔ Controller/ processor

476

Receiving processor ↔ Multi-antenna receiving processor

470          472

420
418
Transmitting device
Receiving device

⋮

420
Transmitting device
Receiving device

418

452
454
Transmitting device
Receiving device

⋮

452
Transmitting device
Receiving device

454

450

457          468

Multi-antenna transmitting processor ← Transmitting processor

459

Controller/ processor ↔ Memory ⌐ 460

Data source ⌐ 467

Multi-antenna receiving processor → Receiving processor

458          456

FIG. 4

41

| U1. Second node | | U2. First node |
|---|---|---|
| S511. Send a first information block | | |

First information block →

S521. Receive a first information block

S5101. Send an RS in a first RS resource set

RS →

S5201. Receive the RS in the first RS resource set

F51. Optional

S522. Send first CSI

← First CSI

S512. Receive first CSI

End

End

FIG. 5

First bit group

Bit #0        Bit #1        ⋯        Target bit        ⋯

↑

$n^{th}$ bit

The target bit belongs to a $p^{th}$          Depends on
bit subgroup,                              $p \longrightarrow n$

FIG. 6

Corresponds to
Target bit ⟷ First parameter

The target bit belongs to a $p^{th}$          Depends on
bit subgroup,                          $p \longrightarrow$ First parameter

FIG. 7

Input →  First encoder  → Output

FIG. 8

Depends on
First bit group ⟶ First compressed CSI

FIG. 9

Second-type
feedback (optional)

Second
processor unit

First data set ⟶ Third
processor unit

Target first-type parameter group

First-type
feedback (optional)

Second data set ⟶ Fourth processor unit ⟶ First-type output ⟶ Fifth
processor
unit

FIG. 10

First scalar group

Scalar #0     Scalar #1    · · ·

Quantization   Quantization

Bit block #0    Bit block #1    · · ·

First bit group

FIG. 11

First vector group

Vector #0     Vector #1    · · ·

Quantization   Quantization

Bit block #0    Bit block #1    · · ·

First bit group

FIG. 12

First compressed CSI →  First quantizer  → First bit group

FIG. 13

First bit block

Bit block #0    Bit block #1   · · ·    First bit group    · · ·

· · · Target bit · · ·

FIG. 14

First bit block

··· Target bit ···

$k^{th}$ bit

The target bit belongs to a $p^{th}$ bit subgroup,

$p \xrightarrow{\text{Depends on}} k$

FIG.15

Output of a first encoder { First parameter group

FIG.16

M0 bit subgroups with the highest priority

Bit subgroup #0 ··· Bit subgroup #(M0-1) ··· Bit subgroup #(M-1)

Carried by first CSI

FIG. 17

Measurement for a first RS resource set $\xrightarrow{\text{Is used for generating}}$ Second bit group

The second bit group has a higher priority than any bit subgroup in M bit subgroups

FIG. 18

FIG. 19

FIG. 20

## INTERNATIONAL SEARCH REPORT

| International application No. |
| --- |
| **PCT/CN2024/095917** |

**A. CLASSIFICATION OF SUBJECT MATTER**

H04W24/10(2009.01)i

According to International Patent Classification (IPC) or to both national classification and IPC

**B. FIELDS SEARCHED**

Minimum documentation searched (classification system followed by classification symbols)

IPC:H04W24/-

Documentation searched other than minimum documentation to the extent that such documents are included in the fields searched

Electronic data base consulted during the international search (name of data base and, where practicable, search terms used)

CNABS; CNTXT; CNKI; VEN; EPTXT; USTXT; WOTXT; IEEE; 3GPP: 信息块, 参考信号, 资源, 测量, 信道状态信息, 上报, 报告, 汇报, 反馈, 位, 比特, 字节, 优先级, 等级, 位置, 序号, 排序, 参数, MIB, SIB, RS, reference signal, resource, measure, CSI, channel state information, report, feedback, bit, priority, number, position, parameter

**C. DOCUMENTS CONSIDERED TO BE RELEVANT**

| Category* | Citation of document, with indication, where appropriate, of the relevant passages | Relevant to claim No. |
| --- | --- | --- |
| A | CN 114006681 A (SHANGHAI LANGBO COMMUNICATION TECHNOLOGY CO., LTD.) 01 February 2022 (2022-02-01) entire document | 1-28 |
| A | CN 115941122 A (SHANGHAI LANGBO COMMUNICATION TECHNOLOGY CO., LTD.) 07 April 2023 (2023-04-07) entire document | 1-28 |
| A | CN 111385073 A (SPREADSIGNAL SEMICONDUCTOR (NANJING) CO., LTD.) 07 July 2020 (2020-07-07) entire document | 1-28 |
| A | CN 111836309 A (VIVO COMMUNICATION TECHNOLOGY CO., LTD.) 27 October 2020 (2020-10-27) entire document | 1-28 |
| A | CN 114930746 A (ZTE CORP.) 19 August 2022 (2022-08-19) entire document | 1-28 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 August 2024** | **19 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/095917** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2018198590 A1 (LG ELECTRONICS INC.) 12 July 2018 (2018-07-12)<br>entire document | 1-28 |

Form PCT/ISA/210 (second sheet) (July 2022)

**INTERNATIONAL SEARCH REPORT**
Information on patent family members

International application No.

**PCT/CN2024/095917**

| Patent document cited in search report | | | Publication date (day/month/year) | Patent family member(s) | | | Publication date (day/month/year) |
|---|---|---|---|---|---|---|---|
| CN | 114006681 | A | 01 February 2022 | CN | 114006681 | B | 01 March 2024 |
| CN | 115941122 | A | 07 April 2023 | | None | | |
| CN | 111385073 | A | 07 July 2020 | CN | 111385073 | B | 30 September 2022 |
| CN | 111836309 | A | 27 October 2020 | CN | 111836309 | B | 24 October 2023 |
| CN | 114930746 | A | 19 August 2022 | WO | 2021098059 | A1 | 27 May 2021 |
| | | | | EP | 4082137 | A1 | 02 November 2022 |
| | | | | US | 2022361162 | A1 | 10 November 2022 |
| US | 2018198590 | A1 | 12 July 2018 | US | 10615941 | B2 | 07 April 2020 |
| | | | | WO | 2017048057 | A1 | 23 March 2017 |

Form PCT/ISA/210 (patent family annex) (July 2022)